# EUROPEAN PATENT APPLICATION

(11) **EP 4 579 289 A1**
(43) Date of publication of application: **02.07.2025**
(21) Application number: 23857240.8
(22) Date of filing: 14.08.2023
(51) Int. Cl.: G02B 5/20, F21S 2/00, G02F 1/13357

(54) **WAVELENGTH CONVERSION SHEET, AND BACKLIGHT AND LIQUID CRYSTAL DISPLAY DEVICE USING SAME**

(30) Priority: 25.08.2022 JP 2022134140
(71) Applicant: Dai Nippon Printing Co., Ltd., Tokyo 162-8001 (JP)
(72) Inventor: MORIMOTO Taro, Tokyo 162-8001 (JP); SAKAMOTO Takeshi, Tokyo 162-8001 (JP); TAMURA Shuichi, Tokyo 162-8001 (JP); HARUKI Akihito, Tokyo 162-8001 (JP); KIMURA Shota, Tokyo 162-8001 (JP)
(74) Representative: Beck Greener LLP
(86) International application number: PCT/JP2023/029401
(87) International publication number: WO 2024/043127

(57) **Abstract**

Provided is a wavelength conversion sheet that can suppress the generation of dark regions such as black lines over time. A wavelength conversion sheet in which a first protective film, a quantum dot-containing layer containing a quantum dot, and a second protective film are laminated in presented order, wherein when a direction in which the first protective film is positioned and a direction in which the second protective film is positioned, relative to the quantum dot-containing layer, are defined as an inner side and an outer side, respectively, the wavelength conversion sheet has a curled shape being convex on the outer side, a layer configuration of the first protective film and a layer configuration of the second protective film are asymmetrically disposed with respect to the quantum dot-containing layer, the first protective film comprises a first support and a first barrier layer, the second protective film comprises a second support and a second barrier layer, the wavelength conversion sheet comprises at least two or more layers containing a cured product of a curable resin composition, and a layer in contact with the outer side of the first barrier layer and a layer in contact with the outer side of the second barrier layer are each a layer other than the layers containing a cured product of a curable resin composition.

## Description

### Technical Field

The present disclosure relates to a wavelength conversion sheet, and a backlight and a liquid crystal display device using the same.

### Background Art

With the development of a personal computer, the demand for a liquid crystal display device has been increasing. In addition, recently, the penetration rate of a home-use liquid crystal display television has been increasing, and further, a smartphone and a tablet terminal have also been becoming widespread. Because of these, the present situation is that the market for a liquid crystal display device is expanding further.

The liquid crystal display device generally has a color filter, a liquid crystal cell, and a backlight. In the liquid crystal display device, the intensity of light is controlled by the shutter function of the liquid crystal layer in a liquid crystal cell, and the color of each pixel is displayed by dividing the color into the three primary colors of R, G, and B by the color filters. In this manner, the liquid crystal display device displays an image.

Conventionally, a cold cathode tube has been used as a light source of the backlight of the liquid crystal display device. However, in view of low power consumption and space saving, the light source of the backlight has been switched from the cold cathode tube to an LED.

As the LED used as a light source of a backlight, a white LED formed by combining a blue LED and a YAG-based yellow phosphor is widely used. The white LED has a broad spectral distribution of emission wavelength and is called pseudo-white.

On the other hand, in recent years, the development of a backlight using quantum dot technology has also been promoted. The quantum dot refers to a nanometer-sized fine particle of a semiconductor.

The basic configuration of a backlight using a quantum dot is a combination of a light source that generates primary light such as a blue LED, which emits blue light, and a quantum dot.

The quantum dot is, for example, a nano-sized compound semiconductor fine particle composed of a semiconductor fine particle composed of a core which is CdSe and a shell which is ZnS, and a ligand which covers the periphery of the shell. The particle size of the quantum dot is smaller than the Bohr radius of an exciton of the compound semiconductor, and thus the quantum confinement effect appears. Because of this, the quantum dot has a higher light emission efficiency than the conventionally used phosphor using a rare earth ion as an activator, and can realize a high light emission efficiency of 90% or more.

In addition, the emission wavelength of the quantum dot depends on the bandgap energy of the compound semiconductor fine particle quantized as described above, and thus an arbitrary emission wavelength, that is, an arbitrary emission spectrum can be obtained by changing the particle size of the quantum dot. A backlight that combines such a quantum dot with a blue LED or the like can realize high light emission efficiency and high color purity (see, for example, Patent Literatures 1 and 2).

In addition, the quantum dot is also used for lighting, a quantum dot laser, or the like, in addition to a backlight for a liquid crystal display device.

While the quantum dot has the above excellent characteristics, a problem thereof is that the quantum dot is easily degraded by the influence of moisture, oxygen, or the like. Because of this, it is preferable to protect the surfaces of both sides of a quantum dot-containing layer with a barrier film for a wavelength conversion sheet. For example, Patent Literatures 3 and 4 propose a wavelength conversion sheet in which surfaces of both sides of a quantum dot-containing layer are protected by a barrier film.

### Citation List

### Patent Literature

PTL1: WO 2012/132239
PTL2: JP 2015-18131 A
PTL3: JP 2020-19141 A
PTL4: JP 2020-160212 A

### Summary of Invention

### Technical Problem

However, each of the wavelength conversion sheets of Patent Literatures 3 and 4 may suffer from the generation of dark regions such as black lines in part of the surface of the wavelength conversion sheet when being irradiated with primary light in an inspection step before incorporation in a liquid crystal display device.

The aforementioned dark regions tend to be generated in part of the surface of a wavelength conversion sheet. Accordingly, wavelength conversion sheets having no problem in quality can be obtained by removing the aforementioned dark regions. However, removal of the aforementioned dark regions results in significant reduction in the yield of a wavelength conversion sheet.

In view of the above problem, it is an object of the present disclosure to provide a wavelength conversion sheet that can suppress the generation of dark regions such as black lines over time. In addition, it is another object of the present disclosure to provide a backlight and liquid crystal display device using the wavelength conversion sheet.

### Solution to Problem

The present disclosure provides the following [1] to [14].
[1] A wavelength conversion sheet in which a first protective film, a quantum dot-containing layer containing a quantum dot, and a second protective film are laminated in presented order, wherein
   when a direction in which the first protective film is positioned and a direction in which the second protective film is positioned, relative to the quantum dot-containing layer, are defined as an inner side and an outer side, respectively, the wavelength conversion sheet has a curled shape being convex on the outer side,
   a layer configuration of the first protective film and a layer configuration of the second protective film are asymmetrically disposed with respect to the quantum dot-containing layer,
   the first protective film comprises a first support and a first barrier layer,
   the second protective film comprises a second support and a second barrier layer,
   the wavelength conversion sheet comprises at least two or more layers containing a cured product of a curable resin composition, and
   a layer in contact with the outer side of the first barrier layer and a layer in contact with the outer side of the second barrier layer are each a layer other than the layers containing a cured product of a curable resin composition.
[2] The wavelength conversion sheet according to [1], wherein a total thickness of layers positioned on the inner side of the second barrier layer of the second protective film is 1500 nm or less.
[3] The wavelength conversion sheet according to [1] or [2], wherein the quantum dot-containing layer is one of the layers containing a cured product of a curable resin composition.
[4] The wavelength conversion sheet according to any one of [1] to [3], wherein the layer in contact with the outer side of the first barrier layer and the layer in contact with the outer side of the second barrier layer each have a thickness of 5.0 µm or more.
[5] The wavelength conversion sheet according to any one of [1] to [4], wherein the layer in contact with the outer side of the first barrier layer is the first support, and the layer in contact with the outer side of the second barrier layer is the second support.
[6] The wavelength conversion sheet according to any one of [1] to [5], wherein
   the first protective film further comprises a first adhesive layer and a first bulking base material,
   the second protective film further comprises a second adhesive layer and a second bulking base material, and
   the first adhesive layer and the second adhesive layer are each one of the layers containing a cured product of a curable resin composition.
[7] The wavelength conversion sheet according to [6], wherein
   the first protective film comprises the first bulking base material, the first adhesive layer, the first barrier layer, and the first support in presented order from the inner side to the outer side, and
   the second protective film comprises the second bulking base material, the second adhesive layer, the second support, and the second barrier layer in presented order from the outer side to the inner side.
[8] The wavelength conversion sheet according to any one of [1] to [7], wherein the first protective film further comprises a first primer layer on an outermost side of the first protective film.
[9] The wavelength conversion sheet according to any one of [1] to [8], wherein the second protective film further comprises a second primer layer on an innermost side of the second protective film.
[10] The wavelength conversion sheet according to any one of [1] to [9], comprising an anti-sticking layer on at least either one of an innermost side of the first protective film and an outermost side of the second protective film.
[11] The wavelength conversion sheet according to any one of [1] to [10], wherein the first barrier layer and the second barrier layer each comprise an inorganic oxide layer and a coating layer.
[12] The wavelength conversion sheet according to any one of [1] to [11], wherein a total thickness of layers positioned on the inner side of the first barrier layer is 10 µm or more.
[13] The wavelength conversion sheet according to any one of [1] to [12], wherein a total thickness of layers positioned on the outer side of the second barrier layer is 20 µm or more.
[14] A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to any one of [1] to [13].
[15] A liquid crystal display device comprising: a backlight; and a liquid crystal panel, wherein the backlight is the backlight according to [14].

### Advantageous Effects of Invention

The wavelength conversion sheet of the present disclosure, and the backlight and liquid crystal display device using the wavelength conversion sheet of the present disclosure can suppress the generation of dark regions such as black lines over time.

### Brief Description of Drawings

[Fig. 1] Fig. 1 is a cross-sectional view showing one embodiment of the wavelength conversion sheet of the present disclosure.
[Fig. 2] Fig. 2 is a diagram for describing the curled shape of the wavelength conversion sheet of the present disclosure.
[Fig. 3] Fig. 3 is a cross-sectional view showing one embodiment of the backlight of the present disclosure.
[Fig. 4] Fig. 4 is a cross-sectional view showing another embodiment of the backlight of the present disclosure.

### Description of Embodiments

Hereinafter, embodiments of the present disclosure will be described.

### [Wavelength conversion sheet]

The wavelength conversion sheet of the present disclosure is a wavelength conversion sheet in which a first protective film, a quantum dot-containing layer containing a quantum dot, and a second protective film are laminated in presented order, wherein
when a direction in which the first protective film is positioned and a direction in which the second protective film is positioned, relative to the quantum dot-containing layer, are defined as an inner side and an outer side, respectively, the wavelength conversion sheet has a curled shape being convex on the outer side,
a layer configuration of the first protective film and a layer configuration of the second protective film are asymmetrically disposed with respect to the quantum dot-containing layer,
the first protective film comprises a first support and a first barrier layer,
the second protective film comprises a second support and a second barrier layer,
the wavelength conversion sheet comprises at least two or more layers containing a cured product of a curable resin composition, and
a layer in contact with the outer side of the first barrier layer and a layer in contact with the outer side of the second barrier layer are each a layer other than the layers containing a cured product of a curable resin composition.

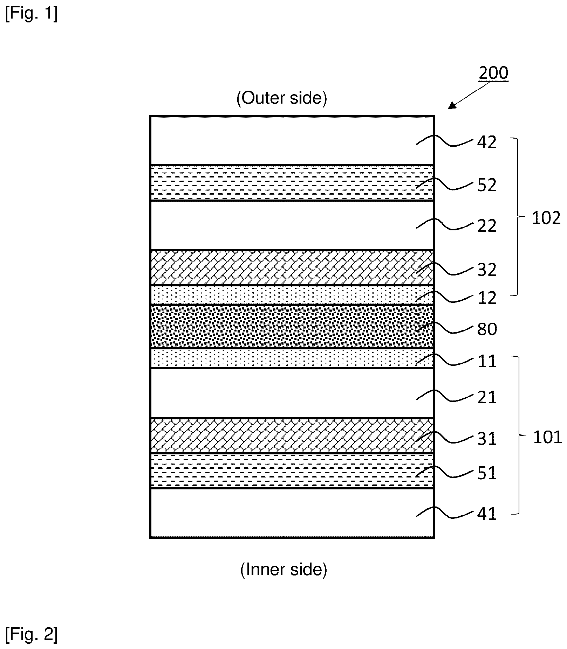

Fig. 1 is a cross-sectional view showing an embodiment of a wavelength conversion sheet 200 of the present disclosure.

In the wavelength conversion sheet 200 in Fig. 1, a first protective film 101, a quantum dot-containing layer 80 containing a quantum dot, and a second protective film 102 are laminated in presented order. The wavelength conversion sheet of the present disclosure has a curled shape being convex on an outer side, on which the second protective film is positioned; however, the curled shape of the wavelength conversion sheet is omitted in Fig. 1 in order to simply illustrate the layer configuration of the wavelength conversion sheet.

In the wavelength conversion sheet 200 in Fig. 1, the layer configuration of the first protective film 101 and the layer configuration of the second protective film 102 are asymmetrically disposed with respect to the quantum dot-containing layer 80. Specifically, in Fig. 1, supports (21, 22) and barrier layers (31, 32) are asymmetrically disposed with respect to the quantum dot-containing layer 80.

In Fig. 1, the first protective film 101 comprises a first bulking base material 41, a first adhesive layer 51, a first barrier layer 31, a first support 21, and a first primer layer 11 in presented order from the inner side to the outer side.

In Fig. 1, the second protective film 102 comprises a second bulking base material 42, a second adhesive layer 52, a second support 22, a second barrier layer 32, and a second primer layer 12 in presented order from the outer side to the inner side.

The wavelength conversion sheet of the present disclosure is not limited to the layer configuration in Fig. 1. For example, the wavelength conversion sheet of the present disclosure may lack at least either one of the first primer layer and the second primer layer. The wavelength conversion sheet of the present disclosure may have an anti-sticking layer on at least either one of the inner side of the first bulking base material and the outer side of the second bulking base material.

### <Curled shape>

When a direction in which the first protective film is positioned and a direction in which the second protective film is positioned, relative to the quantum dot-containing layer, are defined as an inner side and an outer side, respectively, the wavelength conversion sheet of the present disclosure has a curled shape being convex on the outer side.

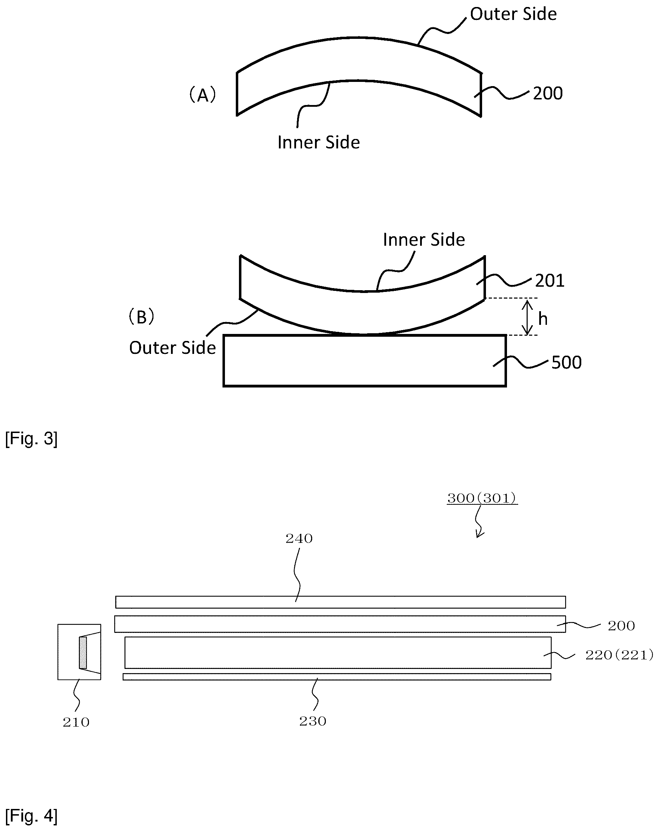

Fig. 2 is a diagram for illustrating the curled shape of the wavelength conversion sheet 200 of the present disclosure. In Fig. 2(A), the wavelength conversion sheet 200 has a curled shape being convex on the outer side.

In the present disclosure, whether a wavelength conversion sheet "has a curled shape" is determined through the following procedure of (1) to (3).
(1) The wavelength conversion sheet is cut to prepare a sample 201 of 100 mm × 100 mm in size.
(2) The sample 201 is placed on a horizontal stage 500 in such a manner that the outer side of the sample 201 faces the stage (Fig. 2(B)).
(3) For each of the four corners of the sample 201, the height of lifting from the horizontal stage 500, h, is measured. If the mean of the first and second largest heights of the four heights is 2.0 mm or more, the wavelength conversion sheet is regarded to "have a curled shape".

To achieve good production efficiency, most steps for the wavelength conversion sheet are performed in a roll-to-roll manner. Accordingly, in most cases, the wavelength conversion sheet has been wound in a roll at the completion of production. It follows that the wavelength conversion sheet wound in a roll has a curled shape being convex on the outer side of winding of the roll because of the curliness or the like. The curled shape of the wavelength conversion sheet remains even after the wavelength conversion sheet in a roll is cut into sheets.

The mean of heights calculated through the procedure of (1) to (3) above is preferably 10.0 mm or less, more preferably 8.0 mm or less, and further preferably 5.0 mm or less. When the mean of heights is 10.0 mm or less makes, it is possible to more easily incorporate the wavelength conversion sheet in a backlight and liquid crystal display device.

The mean of heights can be adjusted, for example, through the diameter of a core in winding the wavelength conversion sheet. The mean of heights tends to decrease as the diameter of the core is larger, and the mean of heights tends to increase as the diameter of the core is smaller. However, it is impossible in view of production efficiency and the size of the production apparatus to employ a large diameter for the core so as to completely suppress curling and cracking of the barrier layers.

The present inventors have found that the cause for the generation of dark regions such as black lines in a wavelength conversion sheet over time is the temporal degradation of quantum dots because of the occurrence of partial cracking in a barrier layer in a wavelength conversion sheet, which has a curled shape. In addition, the present inventors have found that even in a wavelength conversion sheet having a curled shape, the occurrence of cracking in barrier layers can be suppressed by employing a specific layer configuration for the wavelength conversion sheet, and that hence the generation of dark regions such as black lines in the wavelength conversion sheet over time can be suppressed.

When a wavelength conversion sheet is irradiated with a commercially available blue LED or black light, black lines, each having a width of about 1 mm and a length of 50 mm or more, can be visually confirmed.

### <Layer configuration>

The layer configuration of the wavelength conversion sheet of the present disclosure requires the following:
a layer configuration of the first protective film and a layer configuration of the second protective film are asymmetrically disposed with respect to the quantum dot-containing layer,
the first protective film comprises a first support and a first barrier layer,
the second protective film comprises a second support and a second barrier layer,
the wavelength conversion sheet comprises at least two or more layers containing a cured product of a curable resin composition, and
a layer in contact with the outer side of the first barrier layer and a layer in contact with the outer side of the second barrier layer are each a layer other than the layers containing a cured product of a curable resin composition.

Herein, "a layer containing a cured product of a curable resin composition" may be referred to as "a cured product layer".

The wavelength conversion sheet of the present disclosure comprises at least two or more cured product layers. In view of improving the strength of the wavelength conversion sheet, it is preferable for each of the first protective film and the second protective film to comprise one or more cured product layers. Examples of cured product layers include a quantum dot-containing layer, an adhesive layer, and a primer layer.

Cured product layers are likely to shrink because of curing. Cured product layers are likely to undergo curing shrinkage not only in forming the layers but also after forming the layers because of the influence of reaction residues.

In a wavelength conversion sheet having a curled shape being convex on the outer side, a barrier layer has more extension to the outer side than to the inner side. Accordingly, if a layer in contact with the outer side of a barrier layer is a cured product layer, the force of the barrier layer to extend and the force of the cured product layer to shrink reversely act in a part of the barrier layer on the outer side, and as a result the cracking of the barrier layer is likely to occur. In particular, if a layer in contact with the outer side of a barrier layer is a cured product layer having a thickness of 1 µm or more, the cracking of the barrier layer is more likely to occur. If a wavelength conversion sheet comprises a bulking base material, the force with which the barrier layer is pressed is stronger, and as a result the cracking of the barrier layer is more likely to occur. Because the layer in contact with the outer side of the first barrier layer and the layer in contact with the outer side of the second barrier layer are each a layer other than the cured product layers in the wavelength conversion sheet of the present disclosure, the occurrence of cracking in the first barrier layer and the second barrier layer can be suppressed. In addition, the occurrence of cracking in the first barrier layer and the second barrier layer can be suppressed even in the case in which the wavelength conversion sheet of the present disclosure comprises a bulking base material.

Furthermore, the asymmetrical disposition of the layer configuration of the first protective film and the layer configuration of the second protective film in the wavelength conversion sheet of the present disclosure makes it possible to more easily achieve the configuration in which a layer in contact with the outer side of the first barrier layer and a layer in contact with the outer side of the second barrier layer are layers other than the cured product layers without use of layers more than necessary for the wavelength conversion sheet.

The number of layers constituting the first protective film and the number of layers constituting the second protective film are preferably the same. When the number of layers constituting the first protective film is the same as the number of layers constituting the second protective film, it is possible to more easily maintain the physical properties and functions of the wavelength conversion sheet over time.

The thickness of each layer constituting the first protective film and the thickness of the corresponding layer constituting the second protective film may be the same or different. For example, the thickness of the first support and the thickness of the second support may be the same or different. In view of more easily maintaining the physical properties and functions of the wavelength conversion sheet over time, it is preferable that the thickness of each layer constituting the first protective film should be the same as the thickness of the corresponding layer constituting the second protective film.

Layer containing a cured product of a curable resin composition (cured product layer) is a layer containing a cured product of a curable resin composition such as a thermosetting resin composition and an ionizing radiation curable resin composition.

In view of improving the durability, each cured product layer preferably comprises 50% by mass or more, more preferably comprises 70% by mass or more of a cured product of a curable resin composition based on the total amount of the components constituting the cured product layer.

Examples of the cured product layers include a quantum dot-containing layer, an adhesive layer, and a primer layer.

The thickness of each of the layer in contact with the outer side of the first barrier layer and the layer in contact with the outer side of the second barrier layer is preferably 5.0 µm or more, more preferably 8.0 µm or more, and further preferably 10.0 µm or more.

Setting the thickness to 5.0 µm or more makes it possible to more easily suppress the propagation of stress from the layers positioned on the outside of the first barrier layer and the second barrier layer to the first barrier layer and the second barrier layer and thus suppress the occurrence of cracking in the first barrier layer and the second barrier layer. Examples of the stress include stress when a cured product layer undergoes curing shrinkage.

In view of allowing the wavelength conversion sheet to have a smaller total thickness, the thickness is preferably 60.0 µm or less, more preferably 30.0 µm or less, and further preferably 15.0 µm or less.

The layer in contact with the outer side of the first barrier layer and the layer in contact with the outer side of the second barrier layer are not particularly limited as long as they are layers other than the cured product layers. The layer in contact with the outer side of the first barrier layer is preferably the first support, and the layer in contact with the outer side of the second barrier layer is preferably the second support.

The configuration in which the layer in contact with the outer side of the first barrier layer and the layer in contact with the outer side of the second barrier layer are the first support and the second support, respectively, makes it possible to achieve the configuration in which the layer in contact with the outer side of the first barrier layer and the layer in contact with the outer side of the second barrier layer are layers other than the cured product layers without use of layers more than necessary for the wavelength conversion sheet.

The total thickness of layers positioned on the inner side of the first barrier layer is preferably 10 µm or more, more preferably 20 µm or more, and further preferably 30 µm or more. Setting the thickness to 10 µm or more makes it possible to more easily improve the stiffness and strength of the wavelength conversion sheet. If the thickness is larger, the force to press the first barrier layer is larger, nevertheless, the wavelength conversion sheet of the present disclosure makes it possible to easily suppress the cracking of the first barrier layer because the layer in contact with the outer side of the first barrier layer is a layer other than the layers containing a cured product of a curable resin composition.

In view of more easily thinning the wavelength conversion sheet, the total thickness is preferably 220 µm or less, more preferably 150 µm or less, and further preferably 120 µm or less.

The total thickness of layers positioned on the outer side of the second barrier layer is preferably 20 µm or more, more preferably 30 µm or more, and further preferably 50 µm or more. Setting the thickness to 20 µm or more makes it possible to more easily improve the stiffness and strength of the wavelength conversion sheet. If the thickness is larger, the force to press the second barrier layer from outer side is larger, nevertheless, the wavelength conversion sheet of the present disclosure makes it possible to easily suppress the cracking of the second barrier layer because the layer in contact with the outer side of the second barrier layer is a layer other than the layers containing a cured product of a curable resin composition.

In view of more easily thinning the wavelength conversion sheet, the total thickness is preferably 250 µm or less, more preferably 180 µm or less, and further preferably 130 µm or less.

The total thickness of layers positioned on the inner side of the second barrier layer of the second protective film is preferably 1500 nm or less, more preferably 1000 nm or less, and further preferably 500 nm or less. Setting the total thickness to 1500 nm or less makes it possible to suppress the stress applied to the second barrier layer when the wavelength conversion sheet curls to form a convex on the outer side, and thus to more easily suppress the cracking of the second barrier layer. In addition, in view of protecting the quantum dots from moisture, oxygen, and so on, the distance between the quantum dot-containing layer and the second barrier layer is preferably small. That is, setting the total thickness to 1500 nm or less makes it possible to more easily suppress the degradation of the quantum dots.

The lower limit of the total thickness is not particularly limited, but the total thickness is preferably 100 nm or more, more preferably 150 nm or more, and further preferably 200 nm or more.

### <Protective film>

The wavelength conversion sheet of the present disclosure comprises a first protective film and a second protective film.

The first protective film comprises a first support and a first barrier layer, and the second protective film comprises a second support and a second barrier layer.

The first protective film may have a layer other than the first support and the first barrier layer. Examples of the layer other than the first support and the first barrier layer include a first adhesive layer, a first bulking base material, and a first primer layer.

The second protective film may have a layer other than the second support and the second barrier layer. Examples of the layer other than the second support and the second barrier layer include a second adhesive layer, a second bulking base material, and a second primer layer.

The first protective film preferably comprises a first adhesive layer and a first bulking base material. The first adhesive layer is preferably a cured product layer in view of more easily keeping good close adhesion for a long period of time. The first protective film preferably comprises the first bulking base material, the first adhesive layer, the first barrier layer, and the first support in presented order from the inner side to the outer side.

The second protective film preferably comprises a second adhesive layer and a second bulking base material. The second adhesive layer is preferably a cured product layer in view of more easily keeping good close adhesion for a long period of time. The second protective film preferably comprises the second bulking base material, the second adhesive layer, the second support, and the second barrier layer in presented order from the outer side to the inner side.

### <<Support, bulking base material>>

The first protective film comprises a first support. The first protective film may further have a first bulking base material. The first bulking base material makes it possible to more easily improve the stiffness and strength of the wavelength conversion sheet in combination with improving the efficiency in forming the first barrier layer.

The second protective film comprises a second support. The second protective film may further have a second bulking base material. The second bulking base material makes it possible to more easily improve the stiffness and strength of the wavelength conversion sheet in combination with improving the efficiency in forming the second barrier layer.

Hereinafter, the simple expression "the support" means "any of the first support and the second support", and the simple expression "the bulking base material" means "any of the first bulking base material and the second bulking base material".

The support and the bulking base material are not particularly limited as long as these are resin films that do not impair a function of the wavelength conversion sheet.

Examples of the support and the bulking base material include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, an amorphous olefin, and the like.

Among these resin films, a stretched polyester film is preferable, and a biaxially stretched polyester film is more preferable, in view of mechanical strength, dimensional stability, and heat resistance. Examples of the polyester film include a polyethylene terephthalate film and a polyethylene naphthalate film.

The support and the bulking base material may be the same resin film or different resin films.

The total light transmittance according to JIS K7361-1:1997 of the support and the bulking base material are preferably 80% or more, more preferably 85% or more, and further preferably 87% or more.

Each of the support and the bulking base material may be subjected to surface treatment or treatment for easy adherence in view of improving the close adhesion. Examples of the surface treatment include corona discharge treatment, ozone treatment, low temperature plasma treatment with oxygen gas, nitrogen gas, or the like, glow discharge treatment, and oxidation treatment with a chemical or the like. Examples of the treatment for easy adherence include a means to form an easy adherence layer having a thickness of 500 nm or less on the surface of each of the support and the bulking base material. In the present disclosure, the support and the bulking base material, formed an easy adherence layer having a thickness of 500 nm or less are each regarded as a single layer, and the easy adherence layer having a thickness of 500 nm or less are not counted for the number of layers.

The thickness of the support is preferably 5.0 µm or more, more preferably 8.0 µm or more, and further preferably 10.0 µm or more. The thickness of the support is preferably 60.0 µm or less, more preferably 30.0 µm or less, and further preferably 15.0 µm or less.

When a plurality of upper limit options and a plurality of lower limit options of a numerical value are indicated for a constitutional requirement disclosed herein, one selected from the upper limit options and one selected from the lower limit options can be combined to provide an embodiment of a numerical range. For the thickness of the support as described above, examples of the embodiment of a numerical range thereof include 5.0 µm or more and 60.0 µm or less, 5.0 µm or more and 30.0 µm or less, 5.0 µm or more and 15.0 µm or less, 8.0 µm or more and 60.0 µm or less, 8.0 µm or more and 30.0 µm or less, 8.0 µm or more and 15.0 µm or less, 10.0 µm or more and 60.0 µm or less, 10.0 µm or more and 30.0 µm or less, and 10.0 µm or more and 15.0 µm or less.

The thickness of the bulking base material is preferably 10.0 µm or more, more preferably 20.0 µm or more, and further preferably 30.0 µm or more. Setting the thickness of the bulking base material to 10.0 µm or more makes it possible to more easily improve the handleability of the wavelength conversion sheet.

In view of thinning the wavelength conversion sheet, the thickness of the bulking base material is preferably 200 µm or less, more preferably 150 µm or less, more preferably 100 µm or less, and more preferably 75 µm or less.

The thickness of the support and the thickness of the bulking base material preferably satisfy the relationship "thickness of support < thickness of bulking base material". Satisfying the relationship makes it possible to more easily improve the stiffness and strength of the wavelength conversion sheet in combination with improving the efficiency in forming the barrier layer.

Herein, the thickness of each layer constituting the wavelength conversion sheet can be calculated, for example, by photographing a cross section using a scanning electron microscope (SEM), measuring the thicknesses at four points from an image of the cross section, and averaging the values at the four points.

Herein, measurements and evaluations (determination of the presence or absence of curling, measurement of the thicknesses of layers, measurement of optical properties such as total light transmittance, evaluation on the presence or absence of dark regions) are carried out in a room atmosphere at a temperature of 23°C ± 5°C and a relative humidity of 40% or more and 65% or less. Furthermore, samples are exposed to that atmosphere for 30 minutes or more before carrying out any of the measurements and evaluations.

### <<Adhesive layer>>

The first adhesive layer has a role of, for example, integrating the first support and the first bulking base material. The second adhesive layer has a role of, for example, integrating the second support and the second bulking base material.

Hereinafter, the simple expression "the adhesive layer" means "any of the first adhesive layer and the second adhesive layer".

In view of keeping good close adhesion for a long period of time, the adhesive layer is preferably a layer formed of a curable adhesive. That is, the adhesive layer is preferably a layer containing a cured product of a curable resin composition. Accordingly, the first adhesive layer is preferably formed at a position not in contact with the outer side of the first barrier layer. Likewise, the second adhesive layer is preferably formed at a position not in contact with the outer side of the second barrier layer. The first adhesive layer is preferably positioned on the inner side of the first support and the first barrier layer. The second adhesive layer is preferably positioned on the outer side of the second barrier layer and the second support.

In view of improving the durability, the adhesive layer preferably comprises 50% by mass or more, more preferably comprises 70% by mass or more of a cured product of a curable resin composition based on the total amount of the components constituting the adhesive layer.

Examples of the curable adhesive include versatile one-component curable adhesives and two-component curable adhesives. Among these, a two-component curable polyurethane-based adhesive is preferable. The two-component curable polyurethane-based adhesive is an adhesive including a polyol-based compound and an isocyanate-based compound.

The thickness of the adhesive layer is preferably 2 µm or more and 30 µm or less, more preferably 3 µm or more and 20 µm or less, and further preferably 4 µm or more and 10 µm or less.

Setting the thickness to 2 µm or more makes it possible to more easily improve the close adhesion. Setting the thickness to 30 µm or less makes it possible to more easily thin the wavelength conversion sheet and suppress the generation of stress due to curing shrinkage.

### <<Barrier layer>>

The first protective film comprises a first barrier layer, and the second protective film comprises a second barrier layer.

The first barrier layer is preferably positioned on the inner side of the first support. The second barrier layer is preferably positioned on the inner side of the second support.

Hereinafter, the simple expression "the barrier layer" means "any of the first barrier layer and the second barrier layer".

Examples of the barrier layer include: a single layer of a single type selected from the group consisting of "an inorganic oxide layer formed by vapor-depositing an inorganic oxide," "a coating layer formed by applying a coating agent including a water-soluble polymer such as polyvinyl alcohol" and "a layer including a reaction product of a composition including a metal oxide and a phosphorus compound"; a layer obtained by laminating a single type selected from the above group; and a layer obtained by laminating two or more selected from the above group. Among these, a laminate of an inorganic oxide layer and a coating layer is preferable. That is, the first barrier layer and the second barrier layer preferably include an inorganic oxide layer and a coating layer.

Examples of the layer including a reaction product of a composition including a metal oxide and a phosphorus compound is disclosed in WO 2011/122036.

Hereinafter, embodiments of the inorganic oxide layer and the coating layer will be described.

If the first barrier layer on the first support comprises an inorganic oxide layer and a coating layer, the first barrier layer preferably comprises the first support, the inorganic oxide layer, and the coating layer in presented order. The first support is preferably positioned on the outer side of the inorganic oxide layer and the coating layer.

If the barrier layer on the second support comprises an inorganic oxide layer and a coating layer, the barrier layer preferably comprises the second support, the inorganic oxide layer, and the coating layer in presented order. The second support is preferably positioned on the outer side of the inorganic oxide layer and the coating layer.

In view of improving the barrier property, the barrier layer preferably comprises an inorganic oxide layer A, a coating layer A, an inorganic oxide layer B, and a coating layer B in presented order. If the barrier layer on the first support has that configuration, the barrier layer preferably comprises the first support, an inorganic oxide layer A, a coating layer A, an inorganic oxide layer B, and a coating layer B in presented order. If the barrier layer on the second support has that configuration, the barrier layer preferably comprises the second support, an inorganic oxide layer A, a coating layer A, an inorganic oxide layer B, and a coating layer B in presented order.

### <<Inorganic oxide layer>>

Examples of an inorganic oxide for the inorganic oxide layer include one or more selected from aluminum oxide, silicon oxide, and magnesium oxide. Aluminum oxide or silicon oxide is preferable in view of imparting a sufficient barrier property to the wavelength conversion sheet and for production efficiency of the wavelength conversion sheet. Aluminum oxide, which is excellent in transparency, is more preferable.

The inorganic oxide layer can be formed, for example, by a physical vapor deposition method (PVD method) such as a vacuum vapor deposition method, a sputtering method, and an ion plating method, or a chemical vapor deposition method (CVD method) such as a plasma chemical vapor deposition method, a thermochemical vapor deposition method, and a photochemical vapor deposition method. Among these, a vacuum vapor deposition method, which has good productivity (vapor deposition rate), is preferable. The PVD method is preferable in that the inorganic oxide layer is less likely to be contaminated with carbon than in the CVD method.

When the inorganic oxide layer includes silicon and oxygen, the content of the total of silicon and oxygen in each layer is preferably 80% by mass or more, more preferably 90% by mass or more, and further preferably 95% by mass or more on a mass basis. Examples of inorganic oxides containing silicon and oxygen include silicon oxide (SiOₓ) such as silicon dioxide.

When the inorganic oxide layer includes aluminum and oxygen, the content of the total of aluminum and oxygen in each layer is preferably 80% by mass or more, more preferably 90% by mass or more, and further preferably 95% by mass or more on a mass basis. Examples of inorganic oxides containing aluminum and oxygen include aluminum oxide (AlOₓ). As an inorganic oxide containing aluminum and oxygen, a small amount of aluminum hydroxide may be included as long as the aluminum hydroxide does not impair the effect of the present disclosure.

The preferable thickness of the inorganic oxide layer varies depending on the type of the inorganic oxide, and thus cannot be generalized.

When the inorganic oxide layer includes silicon and oxygen, the thickness of the inorganic oxide layer is preferably 15 nm or more, more preferably 20 nm or more, and further preferably 30 nm or more, in view of improving the barrier property.

When the inorganic oxide layer includes silicon and oxygen, the thickness of the inorganic oxide layer is preferably 200 nm or less, more preferably 150 nm or less, and further preferably 100 nm or less. By setting the thickness to 200 nm or less, the occurrence of a scratch and a crack in the inorganic oxide layer can be easily suppressed and the color derived from silicon oxide can be easily suppressed.

When the inorganic oxide layer includes aluminum and oxygen, the thickness of the inorganic oxide layer is preferably 6 nm or more, and more preferably 7 nm or more in order to improve the barrier property.

When the inorganic oxide layer includes aluminum and oxygen, the thickness of the inorganic oxide layer is preferably 25 nm or less, more preferably 20 nm or less, more preferably 15 nm or less, more preferably 12 nm or less, and more preferably 10 nm or less. By setting the thickness to 25 nm or less, the occurrence of a scratch and a crack in the inorganic oxide layer can be easily suppressed.

An anchor layer may be included between the inorganic oxide layer and the first support or the second support, for example, in view of improving the close adhesion.

### <<Coating layer>>

The coating layer preferably includes one or more selected from a water-soluble polymer and a metal alkoxide-based compound. The coating layer includes more preferably one or more selected from the group consisting of a water-soluble polymer, and further preferably one or more selected from the group consisting of a water-soluble polymer and one or more selected from the group consisting of a metal alkoxide-based compound, among a water-soluble polymer and a metal alkoxide-based compound.

When the barrier layer comprises the inorganic oxide layer and the coating layer, it is possible to more easily improve the barrier property of the wavelength conversion sheet.

Examples of the water-soluble polymer include polyvinyl alcohol, polyvinylpyrrolidone, and an ethylene-vinyl alcohol copolymer, and among these, polyvinyl alcohol and an ethylene-vinyl alcohol copolymer are preferable, and polyvinyl alcohol is more preferable, in view of the barrier property. That is, the coating layer includes preferably one or more selected from the group consisting of polyvinyl alcohol and an ethylene-vinyl alcohol copolymer, and more preferably polyvinyl alcohol.

When the coating layer contains a water-soluble polymer and a metal alkoxide-based compound, the content of the water-soluble polymer is preferably 5 parts by mass or more and 500 parts by mass or less, more preferably 7 parts by mass or more and 100 parts by mass or less, and further preferably 8 parts by mass or more and 50 parts by mass or less, per 100 parts by mass in total of the metal alkoxide-based compound.

Examples of the metal alkoxide-based compound include a metal alkoxide, a metal alkoxide hydrolysate, and a metal alkoxide polymer.

The metal alkoxide is a compound represented by the general formula M(OR)ₙ. In the formula, M represents a metal such as Si, Ti, Al, and Zr, and R represents an alkyl group such as a methyl group and an ethyl group. Specific examples of the metal alkoxide include tetramethoxysilane, tetraethoxysilane, and isopropoxyaluminum.

A coating layer can be formed, for example, by applying a coating liquid including a component constituting the coating layer on the inorganic oxide layer and drying the same. The coating liquid may contain an additive such as a silane coupling agent, a curing agent, or a dispersant.

The thickness of the coating layer is preferably 70 nm or more, more preferably 100 nm or more, and further preferably 150 nm or more in order to improve the barrier property.

The thickness of the coating layer is preferably 600 nm or less, more preferably 480 nm or less, more preferably 370 nm or less, and further preferably 300 nm or less. By setting the thickness to 600 nm or less, the wavelength conversion sheet can be thinned and the occurrence of a crack in the coating layer can be easily suppressed.

### <<Primer layer>>

In view of improving the close adhesion to the quantum dot-containing layer, the first protective film may have a first primer layer. The first primer layer is preferably in contact with the quantum dot-containing layer. The first primer layer is preferably positioned on the outermost side of the first protective film. The first primer layer is preferably positioned on the outer side of the first barrier layer and the first support.

In view of improving the close adhesion to the quantum dot-containing layer, the second protective film may have a second primer layer. The second primer layer is preferably in contact with the quantum dot-containing layer. The second primer layer is preferably positioned on the innermost side of the second protective film. The second primer layer is preferably positioned on the inner side of the second support and the second barrier layer.

Hereinafter, the simple expression "the primer layer" means "any of the first primer layer and the second primer layer".

The primer layer preferably includes a resin component. Examples of the resin component include a polyester-based resin, a polyurethane-based resin, and an acrylic-based resin. Among these, a polyurethane-based resin is preferable, and a polyester polyurethane-based resin is more preferable. That is, the primer layer preferably includes a polyurethane-based resin, and more preferably includes a polyester polyurethane-based resin.

The polyurethane-based resin such as the polyester polyurethane-based resin can easily improve the close adhesion to the quantum dot-containing layer. The polyurethane-based resin such as the polyester polyurethane-based resin can also easily relax the stress generated when the quantum dot-containing layer is cured by ionizing radiation or by heat and reduce the propagation of stress to the first protective film and the second protective film.

Examples of the polyurethane-based resin include a reaction product of a one-component or two-component polyurethane-based resin composition obtained by reacting a polyfunctional isocyanate with a hydroxyl group-containing compound. For each of the polyfunctional isocyanate and the hydroxyl group-containing compound, only one type may be used, or a plurality thereof may be used.

Examples of the polyfunctional isocyanate include an aromatic polyisocyanate such as tolylene diisocyanate, diphenylmethane diisocyanate, xylylene diisocyanate, or polymethylene polyphenylene polyisocyanate, and an aliphatic polyisocyanate such as hexamethylene diisocyanate or isophorone diisocyanate.

Examples of the hydroxyl group-containing compound include a polyether polyol, a polyester polyol, a polyester polyurethane polyol, and a polyacrylate polyol. In the present disclosure, a polyester polyol is particularly preferable in view of close adhesion to the quantum dot-containing layer and durability. The reaction product of the polyester polyol and the polyfunctional isocyanate is a polyester polyurethane-based resin.

The content of the polyurethane-based resin is preferably 50% by mass or more, and more preferably 70% by mass or more based on the total amount of the primer layer.

In view of improving the durability, the primer layer is preferably a layer containing a cured product of a curable resin composition. Accordingly, the first primer layer is preferably formed at a position not in contact with the outer side of the first barrier layer. Likewise, the second primer layer is preferably formed at a position not in contact with the outer side of the second barrier layer.

Examples of the cured product of a curable resin composition include a reaction product of a one-component or two-component polyurethane-based resin composition as described above.

The primer layer may contain a silane coupling agent. In the silane coupling agent, a functional group present at one end of the molecule thereof, such as a chloro group, an alkoxy group, or an acetoxy group, is hydrolyzed to form a silanol group (Si-OH), whereby the resin composition of the primer layer is modified with a covalent bond or the others to form a strong bond. In addition, an organic functional group present at the other end of the silane coupling agent, such as a vinyl group, a methacryloxy group, an amino group, an epoxy group, or a mercapto group, can easily improve the close adhesion between the primer layer and the quantum dot-containing layer.

Examples of the silane coupling agent include γ-chloropropyltrimethoxysilane, vinyltrichlorosilane, vinyltriethoxysilane, vinyl-tris(β-methoxyethoxy)silane, γ-methacryloxypropyltrimethoxysilane, β-(3,4-epoxycyclohexyl)ethyltrimethoxysilane, γ-glycidoxypropyltrimethoxysilane, vinyltriacetoxysilane, γ-mercaptopropyltrimethoxysilane, N-β(aminoethyl)-γ-aminopropyltrimethoxysilane, N-β(aminoethyl)-γ-aminopropylmethyldimethoxysilane, γ-ureidopropyltriethoxysilane, bis(β-hydroxyethyl)-γ-aminopropyltriethoxysilane, and γ-aminopropylsilicone, and one or two or more thereof can be used.

The content of the silane coupling agent is preferably 1% by mass or more, and more preferably 3% by mass or more based on the total amount of the primer layer. When the content of the silane coupling agent is in the above range, the close adhesion between the primer layer and the quantum dot-containing layer can be easily further improved.

For improving the extensibility of the primer layer and suppressing the occurrence of a crack in the primer layer, the content of the silane coupling agent is preferably 30% by mass or less, and more preferably 20% by mass or less based on the total amount of the primer layer.

The primer layer may further include a filler. The filler has the role of adjusting the viscosity or the like of a coating liquid for forming a primer layer to improve the coating suitability or the like. As the filler, for example, calcium carbonate, barium sulfate, alumina white, silica, talc, a glass frit, or a resin powder can be used.

The primer layer may further include an additive such as a stabilizer, a crosslinking agent, a lubricant, or an ultraviolet absorber, as necessary.

For the lower limit, the thickness of the primer layer is preferably 100 nm or more, more preferably 150 nm or more, and further preferably 200 nm or more, and the upper limit is preferably 500 nm or less, more preferably 400 nm or less, and further preferably 300 nm or less.

Setting the thickness to 100 nm or more makes it possible to more easily improve the close adhesion between the primer layer and the quantum dot-containing layer. Setting the thickness to 500 nm or less makes it possible to improve the brightness of a backlight using the wavelength conversion sheet by suppressing absorption of transmitted light by the primer layer.

### <<Anti-sticking layer>>

The wavelength conversion sheet of the present disclosure may have an anti-sticking layer. The anti-sticking layer can suppress the occurrence of blocking in the wavelength conversion sheet wound in a roll, and can suppress scratching due to rubbing between the wavelength conversion sheet and another member when the wavelength conversion sheet is incorporated in a liquid crystal display device.

The anti-sticking layer is preferably comprised on at least either one of the innermost side of the first protective film and the outermost side of the second protective film.

The anti-sticking layer preferably includes a filler and a binder resin.

### <<Physical properties>>

The first protective film and the second protective film have a value of water vapor transmission rate according to JIS K7129-2:2019 of preferably 0.20 g/m²•day or less and more preferably 0.15 g/m²•day or less. The conditions for measuring the water vapor transmission rate are a temperature of 40°C and a relative humidity of 100%.

The water vapor transmission rate can be measured, for example, using a water vapor transmission rate measuring apparatus (trade name: PERMATORAN-W 3/31) manufactured by MOCON, Inc.

The first protective film and the second protective film preferably have a value of oxygen transmission rate according to JIS K7126-2:2006 of 0.5 cc/m²•day•atm or less. The conditions for measuring the oxygen transmission rate are a temperature of 23°C and a relative humidity of 90%.

The oxygen transmission rate can be measured, for example, using an oxygen transmission rate measuring apparatus (trade name: OX-TRAN 2/20) manufactured by MOCON, Inc (MOCON method).

### <<b* value>>

The first protective film and the second protective film have a b* value in the L*a*b* color system of preferably 1.0 or less, more preferably -2.5 or more and 1.0 or less, and further preferably -2.0 or more and 0.8 or less. The b* value can be calculated from a result of measurement of spectral transmittance in the visible range (380 nm to 780 nm).

The L*a*b* color system is based on the L*a*b* color system standardized by the International Commission on Illumination (CIE) in 1976 and is adopted in JIS Z8781-4:2013.

The first protective film and the second protective film have a total light transmittance according to JIS K7361-1:1997 of preferably 80% or more, more preferably 85% or more, and further preferably 87% or more.

### <Quantum dot-containing layer>

The quantum dot-containing layer includes a quantum dot and a binder resin. The binder resin preferably comprises a cured product of a curable resin composition in order to improve the durability. That is, the quantum dot-containing layer is preferably a layer containing a cured product of a curable resin composition. Accordingly, the quantum dot-containing layer is preferably formed at a position neither in contact with the outer side of the first barrier layer nor in contact with the outer side of the second barrier layer.

The quantum dot-containing layer preferably comprises 50% by mass or more, and more preferably comprises 70% by mass or more of a cured product of a curable resin composition based on the total amount of the components constituting the quantum dot-containing layer, in order to improve the durability.

The quantum dot is a nanometer-sized fine particle of a semiconductor, exhibits a specific optical or electrical nature due to the quantum confinement effect (quantum size effect), the effect of confining an electron or an exciton in a small nanometer-sized crystal, and is also referred to as a semiconductor nanoparticle or a semiconductor nanocrystal.

The quantum dot is not particularly limited as long as it is a nanometer-sized fine particle of a semiconductor and is a material that generates the quantum confinement effect (quantum size effect). Examples of the quantum dot include a semiconductor fine particle whose emission color is regulated by its own particle size and a semiconductor fine particle having a dopant.

Quantum dots have different emission colors depending on the particle sizes thereof, and for example, in the case of quantum dots constituted only by a core made of CdSe, the peak wavelengths of fluorescence spectra when the particle sizes are 2.3 nm, 3.0 nm, 3.8 nm, and 4.6 nm are 528 nm, 570 nm, 592 nm, and 637 nm, respectively. That is, the particle size of the quantum dot that emits secondary light having a peak wavelength of 637 nm is 4.6 nm, and the particle size of the quantum dot that emits secondary light having a peak wavelength of 528 nm is 2.3 nm.

The quantum dots preferably include one or more selected from the group consisting of a quantum dot that emits secondary light having a wavelength corresponding to red and a quantum dot that emits secondary light having a wavelength corresponding to green, and more preferably include a quantum dot that emits secondary light having a wavelength corresponding to red and a quantum dot that emits secondary light having a wavelength corresponding to green. The quantum dots may contain a quantum dot other than the quantum dot that emits secondary light having a wavelength corresponding to red or the quantum dot that emits secondary light having a wavelength corresponding to green.

The quantum dot content is appropriately adjusted according to the thickness of the quantum dot-containing layer, the recycling rate of light in the backlight, the target color, or the like. When the thickness of the quantum dot-containing layer is in the range described later, the quantum dot content is preferably 0.010 parts by mass or more and 1.0 part by mass or less per 100 parts by mass of the binder resin of the quantum dot-containing layer.

Specific examples of a material that forms the core of the quantum dot include a semiconductor crystal containing a semiconductor compound or a semiconductor such as a group II-VI semiconductor compound such as MgS, MgSe, MgTe, CaS, CaSe, CaTe, SrS, SrSe, SrTe, BaS, BaSe, BaTe, ZnS, ZnSe, ZnTe, CdS, CdSe, CdTe, HgS, HgSe, and HgTe, a group III-V semiconductor compound such as AlN, AlP, AlAs, AlSb, GaAs, GaP, GaN, GaSb, InN, InAs, InP, InSb, TiN, TiP, TiAs, and TiSb, or a group IV semiconductor such as Si, Ge, and Pb. A semiconductor crystal including a semiconductor compound including three or more elements such as InGaP can also be used.

Further, as a quantum dot composed of a semiconductor fine particle having a dopant, a semiconductor crystal can be used that is formed by doping the above semiconductor compound with a cation of a rare earth metal or a cation of a transition metal, such as Eu³⁺, Tb³⁺, Ag⁺, or Cu⁺.

A semiconductor crystal such as CdS, CdSe, CdTe, InP, or InGaP is suitable as a material that forms the core of the quantum dot in view of ease of preparation, controllability of particle size that can provide light emission in the visible range, and fluorescence quantum yield.

The quantum dot may be made of one semiconductor compound or two or more semiconductor compounds, and for example, may have a core-shell type structure having a core made of a semiconductor compound and a shell made of a semiconductor compound different from that of the core.

When the core-shell type quantum dot is used, a material having a bandgap higher than that of the semiconductor compound that forms the core can be used as the semiconductor that forms the shell so that an exciton is confined in the core, whereby the light emission efficiency of the quantum dot can be enhanced.

Examples of the core-shell structure (core/shell) having such a bandgap magnitude relationship include CdSe/ZnS, CdSe/ZnSe, CdSe/CdS, CdTe/CdS, InP/ZnS, Gap/ZnS, Si/ZnS, InN/GaN, InP/CdSSe, InP/ZnSeTe, InGaP/ZnSe, InGaP/ZnS, Si/AlP, InP/ZnSTe, InGaP/ZnSTe, and InGaP/ZnSSe.

The size of the quantum dot may be appropriately controlled by the material that constitutes the quantum dot so that light having a desired wavelength can be obtained. As the particle size of the quantum dot decreases, the energy bandgap increases. Specifically, as the crystal size decreases, the light emission of the quantum dot shifts to the blue side, that is, to the high energy side. Accordingly, by changing the size of the quantum dot, the emission wavelength thereof can be regulated over the entire spectral wavelength region of the ultraviolet region, the visible region, and the infrared region.

In general, the particle size (diameter) of the quantum dot is preferably in the range of 0.5 nm or more and 20 nm or less and preferably in the range of 1 nm or more and 10 nm or less. A narrower size distribution of the quantum dot can provide a clearer emission color.

The shape of the quantum dot is not particularly limited, and may be, for example, a spherical shape, a rod shape, a disk shape, or any other shape. When the quantum dot is not in a spherical shape, the particle size of the quantum dot can be a value of a truly spherical shape having the same volume.

The quantum dot may be coated with a resin.

The binder resin of the quantum dot-containing layer preferably comprises a cured product of a curable resin composition such as a thermosetting resin composition and an ionizing radiation curable resin composition, in order to improve the durability.

The thermosetting resin composition is a composition including at least a thermosetting resin, and is a resin composition that is cured by heating. The thermosetting resin composition includes preferably a thiol compound and more preferably a polyfunctional thiol compound, which are described later, in addition to the thermosetting resin.

Examples of the thermosetting resin include an acrylic resin, a urethane resin, a phenol resin, a urea melamine resin, an epoxy resin, an unsaturated polyester resin, and a silicone resin. In the thermosetting resin composition, a curing agent is added, as necessary, to these curable resins.

The ionizing radiation curable resin composition is a composition including a compound having an ionizing radiation curable functional group (hereinafter, also referred to as an "ionizing radiation curable compound"). The ionizing radiation curable resin composition includes preferably a thiol compound and more preferably a polyfunctional thiol compound, which are described later, in addition to the ionizing radiation curable compound.

Examples of the ionizing radiation curable functional group include an ethylenically unsaturated bond group such as a (meth)acryloyl group, a vinyl group, or an allyl group, an epoxy group, and an oxetanyl group, and among these, an ethylenically unsaturated bond group is preferable. Among the ethylenically unsaturated bond groups, a (meth)acryloyl group is preferable. Hereinafter, the ionizing radiation curable compound having a (meth)acryloyl group is referred to as a (meth)acrylate-based compound. That is, the binder resin preferably includes a cured product of a composition including a (meth)acrylate-based compound.

As used herein, "(meth)acrylate" refers to methacrylate and acrylate. As used herein, "ionizing radiation" means an electromagnetic wave or a charged particle beam having an energy quantum that can polymerize or crosslink a molecule among electromagnetic waves or charged particle beams, and usually, an ultraviolet ray (UV) or an electron beam (EB) is used. An electromagnetic wave such as an X-ray or a γ-ray, and a charged particle beam such as an α-ray or an ion beam can also be used.

The ionizing radiation curable compound may be a monofunctional ionizing radiation curable compound having only one such functional group, a polyfunctional ionizing radiation curable compound having two or more such functional groups, or a mixture thereof. Among these, a polyfunctional ionizing radiation curable compound is preferable, and a polyfunctional (meth)acrylate-based compound having two or more (meth)acryloyl groups is more preferable. That is, the binder resin includes preferably a cured product of a polyfunctional ionizing radiation curable compound and more preferably a cured product of a polyfunctional (meth)acrylate-based compound. Further, the binder resin includes preferably a cured product of a composition including a polyfunctional ionizing radiation curable compound and a thiol compound and more preferably a cured product of a composition including a polyfunctional (meth)acrylate-based compound and a thiol compound.

The polyfunctional (meth)acrylate-based compound may have an alkyleneoxy group.

As the alkyleneoxy group, for example, an alkyleneoxy group having 2 or more to 4 or less carbon atoms is preferable, an alkyleneoxy group having 2 or 3 carbon atoms is more preferable, and an alkyleneoxy group having 2 carbon atoms is further preferable.

The polyfunctional (meth)acrylate-based compound having an alkyleneoxy group may be a polyfunctional (meth)acrylate-based compound having a polyalkyleneoxy group including a plurality of alkyleneoxy groups.

When the polyfunctional (meth)acrylate-based compound has an alkyleneoxy group, the number of alkyleneoxy groups in one molecule is preferably 2 or more and 30 or less, and more preferably 2 or more and 20 or less, further preferably 3 or more and 10 or less, and more further preferably 3 or more and 5 or less.

When the polyfunctional (meth)acrylate-based compound has an alkyleneoxy group, the compound preferably has a bisphenol structure. This tends to improve the heat resistance of the cured product. Examples of the bisphenol structure include a bisphenol A structure and a bisphenol F structure, and among these, a bisphenol A structure is preferable.

As the polyfunctional (meth)acrylate-based compound having an alkyleneoxy group, above all, ethoxylated bisphenol A type di(meth)acrylate, propoxylated bisphenol A type di(meth)acrylate, and propoxylated ethoxylated bisphenol A type di(meth)acrylate are preferable, and ethoxylated bisphenol A type di(meth)acrylate is more preferable.

The ionizing radiation curable compound may be a monomer, an oligomer, a low molecular weight polymer, or a mixture thereof.

As described above, the thermosetting resin composition and the ionizing radiation curable resin composition preferably include a thiol compound.

The thiol compound is a compound having one or more units represented by R-SH wherein R is an organic group. As used herein, a compound having one unit represented by R-SH is referred to as a monofunctional thiol compound, and a compound having two or more units represented by R-SH is referred to as a polyfunctional thiol compound.

The thiol compound may be a monofunctional thiol compound, but a polyfunctional thiol compound is preferable in view of improving the strength of the quantum dot-containing layer. Among the polyfunctional thiol compounds, a trifunctional thiol compound or a tetrafunctional thiol compound is more preferable.

The thiol compound causes a thiol-ene reaction of the following equation with a compound having a radically polymerizable functional group in the presence of a radical polymerization initiator. The thiol-ene reaction is preferable in the following: because the thiol-ene reaction can suppress polymerization shrinkage, the stress generated at the time of curing the quantum dot-containing layer is relaxed, and as a result, the interlayer close adhesion of the wavelength conversion sheet is easily further improved. In addition, the cured product obtained by the thiol-ene reaction is preferable in that the heat resistance is easily improved.

The following reaction is an example of a reaction between a monofunctional thiol compound and a compound having one radically polymerizable functional group. It is considered that the reaction product of a polyfunctional thiol compound and a compound having two or more radically polymerizable functional groups easily forms a dendrimer structure. Then, it is considered that when the dendrimer structure is formed, the flexibility of the quantum dot-containing layer increases, and that the quantum dot-containing layer itself easily exerts an excellent stress relaxation property. Examples of the radically polymerizable functional group include an ethylenically unsaturated bond-containing group such as a (meth)acryloyl group, a vinyl group, or an allyl group. 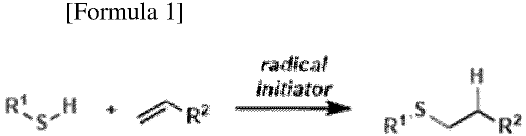 wherein R¹ and R² are organic groups.

Specific examples of the monofunctional thiol compound include hexanethiol, 1-heptanethiol, 1-octanethiol, 1-nonanethiol, 1-decanethiol, 3-mercaptopropionic acid, methyl mercaptopropionate, methoxybutyl mercaptopropionate, octyl mercaptopropionate, tridecyl mercaptopropionate, 2-ethylhexyl-3-mercaptopropionate, and n-octyl-3-mercaptopropionate.

Specific examples of the polyfunctional thiol compound include ethylene glycol bis(3-mercaptopropionate), diethylene glycol bis(3-mercaptopropionate), tetraethylene glycol bis(3-mercaptopropionate), 1,2-propylene glycol bis(3-mercaptopropionate), diethylene glycol bis(3-mercaptobutyrate), 1,4-butanediol bis(3-mercaptopropionate), 1,4-butanediol bis(3-mercaptobutyrate), 1,8-octanediol bis(3-mercaptopropionate), 1,8-octanediol bis(3-mercaptobutyrate), hexanediol bisthioglycolate, trimethylolpropane tris(3-mercaptopropionate), trimethylolpropane tris(3-mercaptobutyrate), trimethylolpropane tris(3-mercaptoisobutyrate), trimethylolpropane tris(2-mercaptoisobutyrate), trimethylolpropane tristhioglycolate, tris-[(3-mercaptopropionyloxy)-ethyl]-isocyanurate, trimethylolethane tris(3-mercaptobutyrate), pentaerythritol tetrakis(3-mercaptopropionate), pentaerythritol tetrakis(3-mercaptobutyrate), pentaerythritol tetrakis(3-mercaptoisobutyrate), pentaerythritol tetrakis(2-mercaptoisobutyrate), dipentaerythritol hexakis(3-mercaptopropionate), dipentaerythritol hexakis(2-mercaptopropionate), dipentaerythritol hexakis(3-mercaptobutyrate), dipentaerythritol hexakis(3-mercaptoisobutyrate), dipentaerythritol hexakis(2-mercaptoisobutyrate), pentaerythritol tetrakisthioglycolate, and dipentaerythritol hexakisthioglycolate.

In the ionizing radiation curable resin composition (or thermosetting resin resin composition), the mass ratio of the ionizing radiation curable compound (or thermosetting resin) and the thiol compound is preferably 80:20 to 35:65 and more preferably 70:30 to 40:60.

When the ionizing radiation curable compound is an ultraviolet curable compound, the ionizing radiation curable composition preferably includes an additive such as a photopolymerization initiator or a photopolymerization accelerator.

The quantum dot-containing layer may include an internal diffusion particle such as an organic particle and an inorganic particle.

The content of the internal diffusion particle is preferably 1 part by mass or more and 40 parts by mass or less and more preferably 3 parts by mass or more and 30 parts by mass or less per 100 parts by mass of the binder resin.

The average particle size of the internal diffusion particle is preferably 1 µm or more and 7 µm or less and more preferably 1 µm or more and 3 µm or less.

The thickness of the quantum dot-containing layer is preferably 10 µm or more and 200 µm or less, more preferably 20 µm or more and 150 µm or less, and further preferably 30 µm or more and 130 µm or less.

### <Applications>

The wavelength conversion sheet of the present disclosure can be used, for example, for a surface light source. Examples of the surface light source include a backlight light source of a liquid crystal display device and a backlight light source of an inspection device. That is, the wavelength conversion sheet of the present disclosure can be used as a "wavelength conversion sheet of a backlight light source of a liquid crystal display device", a "wavelength conversion sheet of a backlight light source of an inspection device", or the like.

Further, the wavelength conversion sheet of the present disclosure can also be used as a "wavelength conversion sheet for horticulture". Examples of the wavelength conversion sheet for horticulture include a sheet having the function of converting an ultraviolet ray into a wavelength suitable for plant growth. Examples of the wavelength suitable for plant growth include a wavelength suitable for photosynthesis. The wavelength conversion sheet for horticulture can be installed, for example, on a ceiling or the like of a horticultural facility such as a plastic greenhouse and a glasshouse.

### [Backlight]

The backlight of the present disclosure is a backlight including: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet of the present disclosure described above.

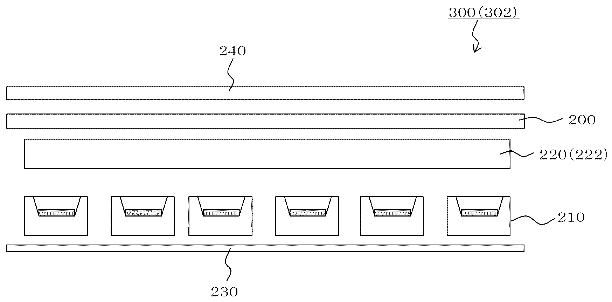

Examples of a backlight 300 of the present disclosure include an edge-lit type backlight 301 as shown in Fig. 3 and a direct-lit type backlight 302 as shown in Fig. 4.

An optical plate 220 used for the edge-lit type backlight 301 in Fig. 3 is an optical member for guiding primary light emitted by a light source 210, and is a so-called light guide plate 221. The light guide plate 221 has, for example, a substantially flat plate shape configured to have at least one surface as a light coming-in surface and one surface substantially orthogonal to the light coming-in surface as a light going-out surface.

The light guide plate is mainly made of a matrix resin selected from the group consisting of a highly transparent resin such as polymethyl methacrylate. A resin particle having a refractive index different from that of the matrix resin may be added, as necessary, to the light guide plate. Each surface of the light guide plate may have a complicated surface shape instead of a uniform flat surface, and may be provided with a dot pattern or the like.

The optical plate 220 used for the direct-lit type backlight 302 of Fig. 4 is an optical member (light diffusing plate 222) having a light diffusing property for making the pattern of the light source 210 less visible. Examples of the light diffusing plate 222 include a milky white resin plate having a thickness of 1 mm or more and 3 mm or less.

In addition to the light source, the optical plate, and the wavelength conversion sheet described above, the edge-lit type and direct-lit type backlights may include one or more members selected from the group consisting of a reflector, a light diffusing film, a prism sheet, a brightness enhancement film (BEF), a reflective polarizing film (DBEF), and the like, depending on the purpose.

The reflector is disposed on the opposite side of the optical plate from the light going-out surface side. The light diffusing film, the prism sheet, the brightness enhancement film, and the reflective polarizing film are disposed on the light going-out surface side of the optical plate. A backlight having an excellent balance of front brightness, viewing angle, and the like can be provided when the backlight is configured to include one or more members selected from the group consisting of a reflector, a light diffusing film, a prism sheet, a brightness enhancement film, a reflective polarizing film, and the like.

In the edge-lit type and direct-lit type backlights, the light source 210 is a light emitting body that emits primary light, and it is preferable to use a light emitting body that emits primary light having a wavelength corresponding to blue. The primary light having a wavelength corresponding to blue preferably has a peak wavelength in the range of 380 nm or more and 480 nm or less. The peak wavelength range is more preferably 450 nm ± 7 nm, more preferably 450 nm ± 5 nm, more preferably 450 nm ± 3 nm, and more preferably 450 nm ± 1 nm.

The light source 210 is preferably an LED light source and more preferably a blue monochromatic LED light source, in view of simplifying and downsizing the device in which the backlight is installed. At least one light source 210 is needed to be included, and a plurality of light sources 210 are preferably included in view of emitting sufficient primary light and homogenizing the brightness distribution on the light going-out surface side.

### [Liquid crystal display device]

The liquid crystal display device of the present disclosure is a liquid crystal display device including a backlight and a liquid crystal panel, wherein the backlight is the backlight of the present disclosure described above.

The liquid crystal panel is not particularly limited, and a general-purpose liquid crystal panel can be used as the liquid crystal panel of the liquid crystal display device. For example, a liquid crystal panel having a general structure can be used in which the liquid crystal layer is sandwiched between glass plates on the upper side and the lower side, respectively, thereof, specifically, a liquid crystal panel using a display mode such as TN, STN, VA, IPS, and OCB.

The liquid crystal display device further includes a polarizing plate, a color filter, and the like. A general-purpose polarizing plate and color filter can be used.

The display image of the liquid crystal display device is displayed in color by the white light emitted from the backlight penetrating the color filter. The liquid crystal display device, in which a color filter that matches the spectrum of a backlight using a quantum dot is used, can realize a display that is excellent in brightness and efficiency and produces a very clear color.

### Examples

Next, the present disclosure will be described in more detail with reference to Examples, but the present disclosure is not limited to these Examples at all. "Parts" and "%" are by mass unless otherwise specified.

### 1. Measurements and evaluations

The following measurements and evaluations of the wavelength conversion sheets or wavelength conversion sheets of Examples and Comparative Examples were carried out. Results thereof are shown in Table 1 or 2.

### 1-1. Proportion of black line (good product rate)

### <Providing backlight for measurement>

A backlight equipped with a direct-lit type blue LED having an emission central wavelength of 450 nm and a full width at half maximum of 20 nm was provided as a light source. On the light going-out side of the backlight as the light source, a light diffusing plate, a wavelength conversion sheet including a quantum dot-containing layer, a prism sheet, and a reflective polarizing plate (brightness enhancement film, manufactured by 3M, DBEF (registered trademark)) are disposed in presented order. In addition, a reflective sheet is provided on the opposite side of the light source from the light going-out side.

### <Providing samples of wavelength conversion sheet>

Durability test shown below was carried out for wavelength conversion sheets of Examples and Comparative Examples in the form of a roll. From each of the wavelength conversion sheets of Examples and Comparative Examples in the form of a roll after being subjected to the durability test, 100 samples (100 mm × 100 mm) were cut out. The 100 samples were collected in such a manner that the sampling positions were distributed from the core of the roll to the outer side of winding without being biased.

### <<Durability test>>

Test to expose wavelength conversion sheets to an atmosphere at a temperature of 30°C and a relative humidity of 90% for 1000 hours.

### <Preparation of backlights for evaluation and evaluation thereof>

The wavelength conversion sheet in each backlight was changed to any one of the samples to obtain backlights for evaluation. Before incorporating the samples in the backlights for evaluation, the samples were exposed to an atmosphere at a temperature of 23°C ± 5°C and a relative humidity of 40% or more and 65% or less for 30 minutes or more. The backlights for evaluation were turned on, and evaluation was performed by visual observation on whether any black line was generated or not. For each of Examples and Comparative Examples, 100 samples were evaluated. In samples with generation of any black line, the width of each black line was about 1 mm, and the length of each black line was 50 mm or more. Good product rates for 100 samples are shown in Table 1. Good product rates of 95% or more are at the passing level. On samples with good product rates of less than 95%, it was checked which of the first barrier layer and the second barrier layer cracking had occurred in.

### 2. Preparation of quantum dot dispersion liquid

A quantum dot and amino-modified silicone were mixed at the composition ratio shown below in a glove box purged with nitrogen such that the oxygen concentration was 300 ppm or less, and the resulting mixture was stirred using a magnetic stirrer for 4 hours while heated in a water bath at 90°C. Thereafter, the mixture was filtered through a polypropylene filter having a pore size of 0.2 µm to obtain a CdSe/ZnS core-shell type quantum dot dispersion liquid.
- Quantum dot 0.9 parts by mass
   (Emission peak: 540 nm, serial number: 748056, manufactured by Sigma-Aldrich Corporation)
- Quantum dot 0.9 parts by mass
   (Emission peak: 630 nm, serial number: 790206, manufactured by Sigma-Aldrich Corporation)
- Amino-modified silicone 99 parts by mass
   (Manufactured by Genesee Polymers Corporation, product number: GP-344, viscosity: 670 mPa•s)

### 3. Preparation of wavelength conversion sheet

### [Example 1]

### <Preparation of first protective film>

A surface of a first support (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, the coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm, thereby obtaining a laminated body 1-1 having the first barrier layer on the first support. The first barrier layer has the inorganic oxide layer A, the coating layer B, the inorganic oxide layer C, and the coating layer D in presented order from the first support side.

Next, a two-component curable polyurethane-based adhesive was applied onto one surface of a first bulking base material (biaxially stretched PET film, thickness: 100 µm) by gravure printing, and dried to form a first adhesive layer having a thickness of 7 µm, thereby obtaining a laminated body 1-2 having the first adhesive layer on the first bulking base material.

Next, the surface of the first adhesive layer side of the laminated body 1-2 was superposed on the surface of the first barrier layer side of the laminated body 1-1, and the laminated body 1-1 and the laminated body 1-2 were dry-laminated.

Through the above operations, the first protective film having the first bulking base material, the first adhesive layer, the first barrier layer, and the first support in presented order from the inner side to the outer side for use in Example 1 was obtained.

### <Preparation of second protective film>

A surface of a second support (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, the coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm.

Next, the coating liquid for primer layer formation shown later was applied onto the coating layer D by gravure printing, and heat-treated at 80°C for 60 seconds to form a second primer layer having a thickness of 250 nm.

Through the above operations, a laminated body 1-3 having the second primer layer, the second barrier layer, and the second support in presented order was obtained. The second barrier layer has the inorganic oxide layer A, the coating layer B, the inorganic oxide layer C, and the coating layer D in presented order from the second support side.

Next, a two-component curable polyurethane-based adhesive was applied onto one surface of a second bulking base material (biaxially stretched PET film, thickness: 100 µm) by gravure printing, and dried to form a second adhesive layer having a thickness of 7 µm, thereby obtaining a laminated body 1-4 having the second adhesive layer on the second bulking base material.

Next, the surface of the second adhesive layer side of the laminated body 1-4 was superposed on the surface of the second support side of the laminated body 1-3, and the laminated body 1-3 and the laminated body 1-4 were dry-laminated.

Through the above operations, a second protective film having the second bulking base material, the second adhesive layer, the second support, the second barrier layer, and the second primer layer in presented order from the outer side to the inner side for use in Example 1 was obtained.

### <Preparation of wavelength conversion sheet>

A coating liquid for a quantum dot-containing layer having the formulation shown later was applied onto the surface of the second primer layer side of the second protective film, and dried to form a quantum dot-containing layer not irradiated with ionizing radiation, thereby obtaining a laminated body 1-5.

Next, the laminated body 1-5 and the first protective film were laminated such that the surface of the side of the quantum dot-containing layer not irradiated with ionizing radiation of the laminated body 1-5 and the surface of the first support side of the first protective film faced each other, and the resultant was then irradiated with an ultraviolet ray to allow the curing of the ionizing radiation curable resin composition of the quantum dot-containing layer to proceed. The thickness of the quantum dot-containing layer is 30 µm.

Next, the wavelength conversion sheet was wound around a core having a diameter of 177 mm in such a manner that the first protective film side coincided with the inner side to obtain a wavelength conversion sheet of Example 1 in the form of a roll. The wavelength conversion sheet of Example 1 in the form of a roll has a width of 1400 mm and a length of 400 mm.

From each of the core side of the wavelength conversion sheet of Example 1 in the form of a roll and the outer side of winding thereof, 100 mm × 100 mm samples were cut out. The samples from the core side and the samples from the outer side of winding each had a curled shape being convex on the second protective film side. A sample cut out from a part between the core side and the outer side of winding also had a curled shape being convex on the second protective film side. For the samples from the core side, the mean of the first and second largest heights calculated through the procedure of (1) to (3) in the text of the specification was 4.0 mm. For the samples from the outer side of winding, the mean of the first and second largest heights was 3.3 mm. The layer configuration of the wavelength conversion sheet of Example 1 is shown in Table 1.

### <Preparation of coating liquid for coating layer formation>

Tetraethoxysilane was mixed into a solution (pH 2.2) obtained by mixing water, isopropyl alcohol, and 0.5 N hydrochloric acid, while cooling the same to 10°C, to thereby prepare solution A. Separately, polyvinyl alcohol and isopropyl alcohol having a saponification value of 99% or more were mixed to thereby prepare solution B. Solution A and solution B were mixed to prepare a coating liquid for coating layer formation (solid content: 5% by mass). The mass ratio of tetraethoxysilane to polyvinyl alcohol in the coating liquid for coating layer formation is 100:14.

### <Coating liquid for primer layer formation>

- Polyester polyol 50 parts by mass
   (Hydroxyl value: 62 mgKOH/g, solid content: 20% by mass)
- Silane coupling agent 1 part by mass
   (3-Glycidoxypropylmethyldimethoxysilane)
- Silica filler 1 part by mass
   (Average particle size 5 µm)
- Curing agent 1 part by mass
   (1,6-Hexamethylene diisocyanate, solid content: 35% by mass)
- Solvent 50 parts by mass
   (Methyl ethyl ketone)

### <Coating liquid for quantum dot-containing layer>

- Polyfunctional acrylate-based compound 58.11 parts by mass
   (Ethoxylated bisphenol A diacrylate; trade name "ABE-300" of Shin-Nakamura Chemical Co., Ltd.)
- Polyfunctional thiol compound 38.74 parts by mass
   (Pentaerythritol tetrakis(3-mercaptopropionate); trade name "PEMP" of SC Organic Chemical Co., Ltd.)
- Photopolymerization initiator 0.5 parts by mass
   (Trade name "Omnirad TPO H" of IGM Resins B.V.)
- Quantum dot dispersion liquid prepared in "2" above 1.61 parts by mass
- Acetic acid 0.79 parts by mass
- Titanium oxide 0.25 parts by mass
   (Trade name "Ti-Pure R-706" of The Chemours company; particle size 0.36 µm)

### [Example 2]

### <Preparation of first protective film>

A first barrier layer was formed on one surface of a first support (biaxially stretched PET film having no easy adherence layer, thickness: 12 µm, "EMBLET (registered trademark) PET-F" from UNITIKA LTD.) in the same manner as in Example 1.

Next, the surface of the first support opposite to the surface with the barrier layer formed thereon was subjected to corona discharge treatment, and the above coating liquid for primer layer formation was then applied by gravure printing, and heat-treated at 80°C for 60 seconds to form a first primer layer having a thickness of 300 nm.

Through the above operations, a laminated body 2-1 having the first barrier layer, the first support, and the first primer layer in presented order was obtained. The second barrier layer has the inorganic oxide layer A, the coating layer B, the inorganic oxide layer C, and the coating layer D in presented order from the second support side.

Next, a two-component curable polyurethane-based adhesive was applied onto one surface of a first bulking base material (biaxially stretched PET film, thickness: 38 µm) by gravure printing, and dried to form a first adhesive layer having a thickness of 10 µm, thereby obtaining a laminated body 2-2 having the first adhesive layer on the first bulking base material.

Next, the surface of the first adhesive layer side of the laminated body 2-2 was superposed on the surface of the first barrier layer side of the laminated body 2-1, and the laminated body 2-1 and the laminated body 2-2 were dry-laminated.

Through the above operations, a first protective film having the first bulking base material, the first adhesive layer, the first barrier layer, the first support, and the first primer layer in presented order from the inner side to the outer side for use in Example 2 was obtained.

### <Preparation of second protective film>

A second barrier layer and a second primer layer were formed on one surface of a second support (biaxially stretched PET film having no easy adherence layer thickness: 12 µm, "EMBLET (registered trademark) PET-F" from UNITIKA LTD.) in the same manner as in Example 1. The thickness of the second primer layer was set to 300 nm.

Through the above operations, a laminated body 2-3 having the second primer layer, the second barrier layer, and the second support in presented order was obtained. The second barrier layer has the inorganic oxide layer A, the coating layer B, the inorganic oxide layer C, and the coating layer D in presented order from the second support side.

Next, a two-component curable polyurethane-based adhesive was applied onto one surface of a second bulking base material (biaxially stretched PET film, thickness: 38 µm) by gravure printing, and dried to form a second adhesive layer having a thickness of 10 µm, thereby obtaining a laminated body 2-4 having the second adhesive layer on the second bulking base material.

Next, the surface of the second adhesive layer side of the laminated body 2-4 was superposed on the surface of the second support side of the laminated body 2-3, and the laminated body 2-3 and the laminated body 2-4 were dry-laminated.

Through the above operations, a second protective film having the second bulking base material, the second adhesive layer, the second support, the second barrier layer, and the second primer layer in presented order from the outer side to the inner side for use in Example 1 was obtained.

### <Preparation of wavelength conversion sheet>

A wavelength conversion sheet of Example 2 was obtained in the same manner as in Example 1, except that the first protective film and the second protective film were changed to the first protective film and the second protective film for Example 2, and the thickness of the quantum dot-containing layer was changed to 100 µm.

From each of the core side of the wavelength conversion sheet of Example 2 in the form of a roll and the outer side of winding thereof, 100 mm × 100 mm samples were cut out. The samples from the core side and the samples from the outer side of winding each had a curled shape being convex on the second protective film side. A sample cut out from a part between the core side and the outer side of winding also had a curled shape being convex on the second protective film side. For the samples from the core side, the mean of the first and second largest heights calculated through the procedure of (1) to (3) in the text of the specification was 4.2 mm. For the samples from the outer side of winding, the mean of the first and second largest heights was 3.4 mm. The layer configuration of the wavelength conversion sheet of Example 2 is shown in Table 1.

### [Example 3]

### <Preparation of first protective film>

Aluminum oxide was vapor-deposited on one surface of a first support (biaxially stretched PET film having easy adherence layer on each surface, thickness: 50 µm, "COSMOSHINE (registered trademark) A4360" from TOYOBO CO., LTD.) by a vacuum vapor deposition method to form an inorganic oxide layer A having a thickness of 8 nm. Next, the above coating liquid for coating layer formation was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the above coating liquid for coating layer formation was applied onto the inorganic oxide layer C by gravure printing, and heat-treated at 180°C for 60 seconds to form a coating layer D having a thickness of 230 nm.

Through the above operations, a laminated body 3-1 having the first barrier layer on one surface of the first support was obtained. The first barrier layer has the inorganic oxide layer A, the coating layer B, the inorganic oxide layer C, and the coating layer D in presented order from the first support side.

Next, a two-component curable polyurethane-based adhesive was applied onto one surface of a first bulking base material (biaxially stretched PET film, thickness: 38 µm) by gravure printing, and dried to form a first adhesive layer having a thickness of 5 µm, thereby obtaining a laminated body 3-2 having the first adhesive layer on the first bulking base material.

Next, the surface of the first adhesive layer side of the laminated body 3-2 was superposed on the surface of the first barrier layer side of the laminated body 3-1, and the laminated body 3-1 and the laminated body 3-2 were dry-laminated.

Through the above operations, a first protective film having the first bulking base material, the first adhesive layer, the first barrier layer, and the first support in presented order from the inner side to the outer side for use in Example 3 was obtained.

### <Preparation of second protective film>

A second protective film for use in Example 2 was obtained in the same manner as in Example 1, except that the thicknesses of the second primer layer, the second support, the second bulking base material, and the second adhesive layer were changed to the thicknesses shown in Table 2.

### <Preparation of wavelength conversion sheet>

A wavelength conversion sheet of Example 3 was obtained in the same manner as in Example 1, except that the first protective film and the second protective film were changed to the first protective film and the second protective film for Example 3, and the thickness of the quantum dot-containing layer was changed to 70 µm.

From each of the core side of the wavelength conversion sheet of Example 3 in the form of a roll and the outer side of winding thereof, 100 mm × 100 mm samples were cut out. The samples from the core side and the samples from the outer side of winding each had a curled shape being convex on the second protective film side. A sample cut out from a part between the core side and the outer side of winding also had a curled shape being convex on the second protective film side. For the samples from the core side, the mean of the first and second largest heights calculated through the procedure of (1) to (3) in the text of the specification was 4.0 mm. For the samples from the outer side of winding, the mean of the first and second largest heights was 3.0 mm. The layer configuration of the wavelength conversion sheet of Example 3 is shown in Table 2.

### [Example 4]

### <Preparation of first protective film>

Silicon oxide was vapor-deposited on the surface of a first support (biaxially stretched PET film having easy adherence layer on one surface, thickness: 12 µm, "EMBLET (registered trademark) PTM" from UNITIKA LTD.) on the side with an easy adherence layer by a vacuum vapor deposition method to form an inorganic oxide layer A having a thickness of 20 nm. Next, the above coating liquid for coating layer formation was applied onto the inorganic oxide layer A by gravure printing, and heat-treated at 180°C for 60 seconds to form a coating layer B having a thickness of 300 nm.

Next, the above coating liquid for primer layer formation was applied onto the surface on the opposite side of the first support to the side with the barrier layer formed thereon by gravure printing, and heat-treated at 80°C for 60 seconds to form a first primer layer having a thickness of 300 nm.

Through the above operations, a laminated body 4-1 having the first barrier layer on one surface of the first support and the first primer layer on the other side was obtained. The first barrier layer has the inorganic oxide layer A and the coating layer B in presented order from the first support side.

Next, a two-component curable polyurethane-based adhesive was applied onto one surface of a first bulking base material (biaxially stretched PET film, thickness: 50 µm) by gravure printing, and dried to form a first adhesive layer having a thickness of 5 µm, thereby obtaining a laminated body 4-2 having the first adhesive layer on the first bulking base material.

Next, the surface of the first adhesive layer side of the laminated body 4-2 was superposed on the surface of the first barrier layer side of the laminated body 4-1, and the laminated body 4-1 and the laminated body 4-2 were dry-laminated.

Through the above operations, a first protective film having the first bulking base material, the first adhesive layer, the first barrier layer, the first support, and the first primer layer in presented order from the inner side to the outer side for use in Example 4 was obtained.

### <Preparation of second protective film>

Silicon oxide was vapor-deposited on the surface of a second support (biaxially stretched PET film having easy adherence layer on one surface, thickness: 12 µm, "EMBLET (registered trademark) PTM" from UNITIKA LTD.) on the side with an easy adherence layer by a vacuum vapor deposition method to form an inorganic oxide layer A having a thickness of 20 nm. Next, the above coating liquid for coating layer formation was applied onto the inorganic oxide layer A, and heat-treated at 180°C for 60 seconds to form a coating layer B having a thickness of 300 nm.

Next, the above coating liquid for primer layer formation was applied onto the coating layer B by gravure printing, and heat-treated at 80°C for 60 seconds to form a second primer layer having a thickness of 300 nm.

Through the above operations, a laminated body 4-3 having the second primer layer, the second barrier layer, and the second support in presented order was obtained. The second barrier layer has the inorganic oxide layer A and the coating layer B in presented order from the second support side.

Next, a two-component curable polyurethane-based adhesive was applied onto one surface of a second bulking base material (biaxially stretched PET film, thickness: 50 µm) by gravure printing, and dried to form a second adhesive layer having a thickness of 5 µm, thereby obtaining a laminated body 4-4 having the second adhesive layer on the second bulking base material.

Next, the surface of the second adhesive layer side of the laminated body 4-4 was superposed on the surface of the second support side of the laminated body 4-3, and the laminated body 4-3 and the laminated body 4-4 were dry-laminated.

Through the above operations, a second protective film having the second bulking base material, the second adhesive layer, the second support, the second barrier layer, and the second primer layer in presented order from the outer side to the inner side for use in Example 4 was obtained.

### <Preparation of wavelength conversion sheet>

A wavelength conversion sheet of Example 4 was obtained in the same manner as in Example 1, except that the first protective film and the second protective film were changed to the first protective film and the second protective film for Example 4, and the thickness of the quantum dot-containing layer was changed to 70 µm.

From each of the core side of the wavelength conversion sheet of Example 4 in the form of a roll and the outer side of winding thereof, 100 mm × 100 mm samples were cut out. The samples from the core side and the samples from the outer side of winding each had a curled shape being convex on the second protective film side. A sample cut out from a part between the core side and the outer side of winding also had a curled shape being convex on the second protective film side. For the samples from the core side, the mean of the first and second largest heights calculated through the procedure of (1) to (3) in the text of the specification was 4.3 mm. For the samples from the outer side of winding, the mean of the first and second largest heights was 3.5 mm. The layer configuration of the wavelength conversion sheet of Example 4 is shown in Table 2.

### [Comparative Example 1]

The second protective film for Example 1 was used as a first protective film for Comparative Example 1. The first protective film for Example 1 was used as a second protective film for Comparative Example 1.

A coating liquid for a quantum dot-containing layer having the above formulation was applied onto the surface of the first primer layer side of the first protective film, and dried to form a quantum dot-containing layer not irradiated with ionizing radiation, thereby obtaining a laminated body 5.

Next, the laminated body 5 and the second protective film were laminated such that the surface of the side of the quantum dot-containing layer not irradiated with ionizing radiation of the laminated body 5 and the surface of the second support side of the second protective film faced each other, and the resultant was then irradiated with an ultraviolet ray to allow the curing of the ionizing radiation curable resin composition of the quantum dot-containing layer to proceed. The thickness of the quantum dot-containing layer is 30 µm.

Next, the resultant was wound in the same manner as in Example 1 to obtain a wavelength conversion sheet of Comparative Example 1 in the form of a roll.

The curled shape and the mean of heights for samples cut out from the wavelength conversion sheet of Comparative Example 1 in the form of a roll were comparable to those for the samples of Example 1. The layer configuration of the wavelength conversion sheet of Comparative Example 1 is shown in Table 1.

### [Comparative Example 2]

A wavelength conversion sheet of Comparative Example 2 was obtained in the same manner as in Example 1, except that the second protective film for Example 1 was used as a first protective film for Comparative Example 2 and the second protective film for Example 1 was used as a second protective film for Comparative Example 2.

The curled shape and the mean of heights for samples cut out from the wavelength conversion sheet of Comparative Example 2 in the form of a roll were comparable to those for the samples of Example 1. The layer configuration of the wavelength conversion sheet of Comparative Example 2 is shown in Table 1.

### [Comparative Example 3]

The first protective film for Example 1 was used as a first protective film for Comparative Example 3. The first protective film for Example 1 was used as a second protective film for Comparative Example 3.

A coating liquid for a quantum dot-containing layer having the above formulation was applied onto the surface of the first support side of the first protective film, and dried to form a quantum dot-containing layer not irradiated with ionizing radiation, thereby obtaining a laminated body 6.

Next, the laminated body 6 and the second protective film were laminated such that the surface of the side of the quantum dot-containing layer not irradiated with ionizing radiation of the laminated body 6 and the surface of the second support side of the second protective film faced each other, and the resultant was then irradiated with an ultraviolet ray to allow the curing of the ionizing radiation curable resin composition of the quantum dot-containing layer to proceed. The thickness of the quantum dot-containing layer is 30 µm.

Next, the resultant was wound in the same manner as in Example 1 to obtain a wavelength conversion sheet of Comparative Example 3 in the form of a roll.

The curled shape and the mean of heights for samples cut out from the wavelength conversion sheet of Comparative Example 3 in the form of a roll were comparable to those for the samples of Example 1. The layer configuration of the wavelength conversion sheet of Comparative Example 3 is shown in Table 1.

### [Comparative Example 4]

The second protective film for Example 2 was used as a first protective film for Comparative Example 4. The first protective film for Example 2 was used as a second protective film for Comparative Example 4.

A coating liquid for a quantum dot-containing layer having the above formulation was applied onto the surface of the first primer layer side of the first protective film, and dried to form a quantum dot-containing layer not irradiated with ionizing radiation, thereby obtaining a laminated body 7.

Next, the laminated body 7 and the second protective film were laminated such that the surface of the side of the quantum dot-containing layer not irradiated with ionizing radiation of the laminated body 7 and the surface of the second support side of the second protective film faced each other, and the resultant was then irradiated with an ultraviolet ray to allow the curing of the ionizing radiation curable resin composition of the quantum dot-containing layer to proceed. The thickness of the quantum dot-containing layer is 100 µm.

Next, the resultant was wound in the same manner as in Example 1 to obtain a wavelength conversion sheet of Comparative Example 4 in the form of a roll.

The curled shape and the mean of heights for samples cut out from the wavelength conversion sheet of Comparative Example 4 in the form of a roll were comparable to those for the samples of Example 2. The layer configuration of the wavelength conversion sheet of Comparative Example 4 is shown in Table 1.

### [Comparative Example 5]

A wavelength conversion sheet of Comparative Example 5 was obtained in the same manner as in Example 1, except that the second protective film for Example 2 was used as a first protective film for Comparative Example 5 and the second protective film for Example 2 was used as a second protective film for Comparative Example 5.

The curled shape and the mean of heights for samples cut out from the wavelength conversion sheet of Comparative Example 5 in the form of a roll were comparable to those for the samples of Example 2. The layer configuration of the wavelength conversion sheet of Comparative Example 5 is shown in Table 1.

### [Comparative Example 6]

The first protective film for Example 2 was used as a first protective film for Comparative Example 6. The first protective film for Example 2 was used as a second protective film for Comparative Example 6.

A coating liquid for a quantum dot-containing layer having the above formulation was applied onto the surface of the first primer layer side of the first protective film, and dried to form a quantum dot-containing layer not irradiated with ionizing radiation, thereby obtaining a laminated body 8.

Next, the laminated body 8 and the second protective film were laminated such that the surface of the side of the quantum dot-containing layer not irradiated with ionizing radiation of the laminated body 8 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 100 µm.

Next, the resultant was wound in the same manner as in Example 1 to obtain a wavelength conversion sheet of Comparative Example 6 in the form of a roll.

The curled shape and the mean of heights for samples cut out from the wavelength conversion sheet of Comparative Example 6 in the form of a roll were comparable to those for the samples of Example 2. The layer configuration of the wavelength conversion sheet of Comparative Example 6 is shown in Table 1.

### [Comparative Example 7]

The second protective film for Example 3 was used as a first protective film for Comparative Example 7. The first protective film for Example 3 was used as a second protective film for Comparative Example 7.

A coating liquid for a quantum dot-containing layer having the above formulation was applied onto the surface of the first primer layer side of the first protective film, and dried to form a quantum dot-containing layer not irradiated with ionizing radiation, thereby obtaining a laminated body 9.

Next, the laminated body 9 and the second protective film were laminated such that the surface of the side of the quantum dot-containing layer not irradiated with ionizing radiation of the laminated body 9 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 70 µm.

Next, the resultant was wound in the same manner as in Example 1 to obtain a wavelength conversion sheet of Comparative Example 7 in the form of a roll.

The curled shape and the mean of heights for samples cut out from the wavelength conversion sheet of Comparative Example 7 in the form of a roll were comparable to those for the samples of Example 3. The layer configuration of the wavelength conversion sheet of Comparative Example 7 is shown in Table 2.

### [Comparative Example 8]

A wavelength conversion sheet of Comparative Example 8 was obtained in the same manner as in Example 1, except that the second protective film for Example 3 was used as a first protective film for Comparative Example 8 and the second protective film for Example 3 was used as a second protective film for Comparative Example 8.

The curled shape and the mean of heights for samples cut out from the wavelength conversion sheet of Comparative Example 8 in the form of a roll were comparable to those for the samples of Example 3. The layer configuration of the wavelength conversion sheet of Comparative Example 8 is shown in Table 2.

### [Comparative Example 9]

The first protective film for Example 3 was used as a first protective film for Comparative Example 9. The first protective film for Example 3 was used as a second protective film for Comparative Example 9.

A coating liquid for a quantum dot-containing layer having the above formulation was applied onto the surface of the first support side of the first protective film, and dried to form a quantum dot-containing layer not irradiated with ionizing radiation, thereby obtaining a laminated body 10.

Next, the laminated body 10 and the second protective film were laminated such that the surface of the side of the quantum dot-containing layer not irradiated with ionizing radiation of the laminated body 10 and the surface of the second support side of the second protective film faced each other, and the resultant was then irradiated with an ultraviolet ray to allow the curing of the ionizing radiation curable resin composition of the quantum dot-containing layer to proceed. The thickness of the quantum dot-containing layer is 70 µm.

Next, the resultant was wound in the same manner as in Example 1 to obtain a wavelength conversion sheet of Comparative Example 9 in the form of a roll.

The curled shape and the mean of heights for samples cut out from the wavelength conversion sheet of Comparative Example 9 in the form of a roll were comparable to those for the samples of Example 3. The layer configuration of the wavelength conversion sheet of Comparative Example 9 is shown in Table 2.

### [Comparative Example 10]

The second protective film for Example 4 was used as a first protective film for Comparative Example 10. The first protective film for Example 4 was used as a second protective film for Comparative Example 10.

A coating liquid for a quantum dot-containing layer having the above formulation was applied onto the surface of the first primer layer side of the first protective film, and dried to form a quantum dot-containing layer not irradiated with ionizing radiation, thereby obtaining a laminated body 11.

Next, the laminated body 11 and the second protective film were laminated such that the surface of the side of the quantum dot-containing layer not irradiated with ionizing radiation of the laminated body 11 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 70 µm.

Next, the resultant was wound in the same manner as in Example 1 to obtain a wavelength conversion sheet of Comparative Example 10 in the form of a roll.

The curled shape and the mean of heights for samples cut out from the wavelength conversion sheet of Comparative Example 10 in the form of a roll were comparable to those for the samples of Example 4. The layer configuration of the wavelength conversion sheet of Comparative Example 10 is shown in Table 2.

### [Comparative Example 11]

A wavelength conversion sheet of Comparative Example 11 was obtained in the same manner as in Example 1, except that the second protective film for Example 4 was used as a first protective film for Comparative Example 11 and the second protective film for Example 4 was used as a second protective film for Comparative Example 11.

The curled shape and the mean of heights for samples cut out from the wavelength conversion sheet of Comparative Example 11 in the form of a roll were comparable to those for the samples of Example 4. The layer configuration of the wavelength conversion sheet of Comparative Example 11 is shown in Table 2.

### [Comparative Example 12]

The first protective film for Example 4 was used as a first protective film for Comparative Example 12. The first protective film for Example 4 was used as a second protective film for Comparative Example 12.

A coating liquid for a quantum dot-containing layer having the above formulation was applied onto the surface of the first primer layer side of the first protective film, and dried to form a quantum dot-containing layer not irradiated with ionizing radiation, thereby obtaining a laminated body 12.

Next, the laminated body 12 and the second protective film were laminated such that the surface of the side of the quantum dot-containing layer not irradiated with ionizing radiation of the laminated body 12 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 70 µm.

Next, the resultant was wound in the same manner as in Example 1 to obtain a wavelength conversion sheet of Comparative Example 12 in the form of a roll.

The curled shape and the mean of heights for samples cut out from the wavelength conversion sheet of Comparative Example 12 in the form of a roll were comparable to those for the samples of Example 4. The layer configuration of the wavelength conversion sheet of Comparative Example 12 is shown in Table 2.

### [Table 1]

**Table 1**

| | Layer configuration of wavelength conversion sheet (All of the wavelength conversion sheets have a curled shape being convex on the second protective film side.) | | | | | | | | | | | Good product rate (%) | Barrier layer with occurrence of cracking |
|---|---|---|---|---|---|---|---|---|---|---|---|---|---|
| | First protective film | | | | | Quantum dot-containing layer | Second protective film | | | | | | |
| Example 1 | first bulking base material (100 µm) | first adhesive layer (7 µm) | first barrier layer | first support (12 µm) | | quantum dot-containing layer (30 µm) | second primer layer (250nm) | second barrier layer | second support (12 µm) | second adhesive layer (7 µm) | second bulking base material (100 µm) | 98 | - |
| Comparative Example 1 | first bulking base material (100 µm) | first adhesive layer (7 µm) | first support (12 µm) | first barrier layer | first primer layer (250nm) | quantum dot-containing layer (30 µm) | second support (12 µm) | | second barrier layer | second adhesive layer (7 µm) | second bulking base material (100 µm) | 10 | first and second barrier layers |
| Comparative Example 2 | first bulking base material (100 µm) | first adhesive layer (7 µm) | first support (12 µm) | first barrier layer | first primer layer (250nm) | quantum dot-containing layer (30 µm) | second primer layer (250nm) | second barrier layer | second support (12 µm) | second adhesive layer (7 µm) | second bulking base material (100 µm) | 32 | first barrier layer |
| Comparative Example 3 | first bulking base material (100 µm) | first adhesive layer (7 µm) | first barrier layer | first support (12 µm) | | quantum dot-containing layer (30 µm) | second support (12 µm) | | second barrier layer | second adhesive layer (7 µm) | second bulking base material (100 µm) | 30 | second barrier layer |
| Example 2 | first bulking base material (38 µm) | first adhesive layer (10 µm) | first barrier layer | first support (12 µm) | first primer layer (300nm) | quantum dot-containing layer (100 µm) | second primer layer (300nm) | second barrier layer | second support (12 µm) | second adhesive layer (10 µm) | second bulking base material (38 µm) | 98 | - |
| Comparative Example 4 | first bulking base material (38 µm) | first adhesive layer (10 µm) | first support (12 µm) | first barrier layer | first primer layer (300nm) | quantum dot-containing layer (100 µm) | second primer layer (300nm) | second support (12 µm) | second barrier layer | second adhesive layer (10 µm) | second bulking base material (38 µm) | 9 | first and second barrier layers |
| Comparative Example 5 | first bulking base material (38 µm) | first adhesive layer (10 µm) | first support (12 µm) | first barrier layer | first primer layer (300nm) | quantum dot-containing layer (100 µm) | second primer layer (300nm) | second barrier layer | second support (12 µm) | second adhesive layer (10 µm) | second bulking base material (38 µm) | 31 | first barrier layer |
| Comparative Example 6 | first bulking base material (38 µm) | first adhesive layer (10 µm) | first barrier layer | first support (12 µm) | first primer layer (300nm) | quantum dot-containing layer (100 µm) | second primer layer (300nm) | second support (12 µm) | second barrier layer | second adhesive layer (10 µm) | second bulking base material (38 µm) | 29 | second barrier layer |

### [Table 2]

**Table 2**

| | Layer configuration of wavelength conversion sheet (All of the wavelength conversion sheets have a curled shape being convex on the second protective film side.) | | | | | | | | | | | Good product rate (%) | Barrier layer with occurrence of cracking |
|---|---|---|---|---|---|---|---|---|---|---|---|---|---|
| | First protective film | | | | | Quantum dot-containing layer | Second protective film | | | | | | |
| Example 3 | first bulking base material (38 µm) | first adhesive layer (5 µm) | first barrier layer | first support (50 µm) | | quantum dot-containing layer (70 µm) | second primer layer (300nm) | second barrier layer | second support (50 µm) | second adhesive layer (5 µm) | second bulking base material (38 µm) | 97 | - |
| Comparative Example 7 | first bulking base material (38 µm) | first adhesive layer (5 µm) | first support (50 µm) | first barrier layer | first primer layer (300nm) | quantum dot-containing layer (70 µm) | second support (50 µm) | | second barrier layer | second adhesive layer (5 µm) | second bulking base material (38 µm) | 8 | first and second barrier layers |
| Comparative Example 8 | first bulking base material (38 µm) | first adhesive layer (5 µm) | first support (50 µm) | first barrier layer | first primer layer (300nm) | quantum dot-containing layer (70 µm) | second primer layer (300nm) | second barrier layer | second support (50 µm) | second adhesive layer (5 µm) | second bulking base material (38 µm) | 30 | first barrier layer |
| Comparative Example 9 | first bulking base material (38 µm) | first adhesive layer (5 µm) | first barrier layer | first support (50 µm) | | quantum dot-containing layer (70 µm) | second support (50 µm) | | second barrier layer | second adhesive layer (5 µm) | second bulking base material (38 µm) | 27 | second barrier layer |
| Example 4 | first bulking base material (50 µm) | first adhesive layer (5 µm) | first barrier layer | first support (12 µm) | first primer layer (300nm) | quantum dot-containing layer (70 µm) | second primer layer (300nm) | second barrier layer | second support (12 µm) | second adhesive layer (5 µm) | second bulking base material (50 µm) | 98 | - |
| Comparative Example 10 | first bulking base material (50 µm) | first adhesive layer (5 µm) | first support (12 µm) | first barrier layer | first primer layer (300nm) | quantum dot-containing layer (70 µm) | second primer layer (300nm) | second support (12 µm) | second barrier layer | second adhesive layer (5 µm) | second bulking base material (50 µm) | 14 | first and second barrier layers |
| Comparative Example 11 | first bulking base material (50 µm) | first adhesive layer (5 µm) | first support (12 µm) | first barrier layer | first primer layer (300nm) | quantum dot-containing layer (70 µm) | second primer layer (300nm) | second barrier layer | second support (12 µm) | second adhesive layer (5 µm) | second bulking base material (50 µm) | 40 | first barrier layer |
| Comparative Example 12 | first bulking base material (50 µm) | first adhesive layer (5 µm) | first barrier layer | first support (12 µm) | first primer layer (300nm) | quantum dot-containing layer (70 µm) | second primer layer (300nm) | second support (12 µm) | second barrier layer | second adhesive layer (5 µm) | second bulking base material (50 µm) | 36 | second barrier layer |

It can be confirmed from Table 1 and Table 2 that the wavelength conversion sheets of Examples 1 to 4 succeeded in suppressing the generation of dark regions such as black lines even after the durability test, and exhibited high good product rates. In addition, no cracking had occurred in the first barrier layer or the second barrier layer in each of good product samples of the wavelength conversion sheets of Examples 1 to 4.

On the other hand, it can be confirmed that the wavelength conversion sheets of Comparative Examples 1 to 12 gave many samples with the generation of dark regions such as black lines after the durability test, and exhibited low good product rates.

The wavelength conversion sheets of Comparative Examples 1, 4, 7, and 10 each underwent the occurrence of cracking in both of the first barrier layer and the second barrier layer. Since the wavelength conversion sheets of Comparative Examples 1, 4, 7, and 10 each underwent the occurrence of cracking in the barrier layers on both sides, the good product rates were lower than those for Comparative Examples 2, 3, 5, 6, 8, 9, 11, and 12.

The wavelength conversion sheets of Comparative Examples 2, 5, 8, and 11 each underwent the occurrence of cracking in the first barrier layer.

The wavelength conversion sheets of Comparative Examples 3, 6, 9, and 12 each underwent the occurrence of cracking in the second barrier layer.

The occurrence of cracking was caused in the first barrier layer in each of Comparative Examples 1, 2, 4 to 8, and 10 to 12 probably because the first barrier layer had the first primer layer, which was a cured product layer, in contact with the outer side of the first barrier layer. In addition, the wavelength conversion sheets of Comparative Examples 1, 2, 4 to 8, and 10 to 12 each further have the quantum dot-containing layer, which is a cured product layer having a large thickness, in contact with the outer side of the first primer layer. Thus, cured product layers are continuously formed on the outer side of the first barrier layer in each of Comparative Examples 1, 2, 4 to 8, and 10 to 12, and this is inferred to result in high probability of the occurrence of cracking.

The occurrence of cracking was caused in the second barrier layer in each of Comparative Examples 1, 3, 4, 6, 7, 9, 10, and 12 probably because the second barrier layer had the second adhesive layer, which is a cured product layer, in contact with the outer side of the second barrier layer.

In each of the wavelength conversion sheets of Comparative Examples 1, 4, 7, and 10, the layer configuration of the first protective film and the layer configuration of the second protective film were asymmetrically disposed with respect to the quantum dot-containing layer.

In each of the wavelength conversion sheets of Comparative Examples 2, 3, 5, 6, 8, 9, 11, and 12, the layer configuration of the first protective film and the layer configuration of the second protective film were symmetrically disposed with respect to the quantum dot-containing layer.

The cracking in the barrier layer of each of the wavelength conversion sheets of Comparative Examples was observed as follows. First, from each wavelength conversion sheet, a site with the generation of any black line was cut out with a single-edge razor for trimming and collected as a sample 1. Next, a sample 2 having a cross section of the black line part exposed was prepared by cutting the sample 1 with the ultramicrotome EM UC7 manufactured by LEICA and the diamond knife ultra 35° manufactured by DiATOME to give a cross section traversing the black line. The cross section of the sample 2 was leveled by mechanical cutting. Next, the exposed cross section of the sample 2 was observed with the scanning electron microscope SU8000 manufactured by Hitachi, Ltd. to evaluate the cracking of the barrier layer.

### Reference Signs List

11: First primer layer
12: Second primer layer
21: First support
22: Second support
31: First barrier layer
32: Second barrier layer
41: First bulking base material
42: Second bulking base material
51: First adhesive layer
52: Second adhesive layer
80: Quantum dot-containing layer
101: First protective film
102: Second protective film
200: Wavelength conversion sheet
201: Sample
210: Light source
220: Optical plate
221: Light guide plate
222: Diffusing plate
230: Reflector
240: Prism sheet
300: Backlight
301: Edge-lit type backlight
302: Direct-lit type backlight
500: Horizontal stage

## Claims

1. A wavelength conversion sheet in which a first protective film, a quantum dot-containing layer containing a quantum dot, and a second protective film are laminated in presented order, wherein
when a direction in which the first protective film is positioned and a direction in which the second protective film is positioned, relative to the quantum dot-containing layer, are defined as an inner side and an outer side, respectively, the wavelength conversion sheet has a curled shape being convex on the outer side,
a layer configuration of the first protective film and a layer configuration of the second protective film are asymmetrically disposed with respect to the quantum dot-containing layer,
the first protective film comprises a first support and a first barrier layer,
the second protective film comprises a second support and a second barrier layer,
the wavelength conversion sheet comprises at least two or more layers containing a cured product of a curable resin composition, and
a layer in contact with the outer side of the first barrier layer and a layer in contact with the outer side of the second barrier layer are each a layer other than the layers containing a cured product of a curable resin composition.

2. The wavelength conversion sheet according to claim 1, wherein a total thickness of layers positioned on the inner side of the second barrier layer of the second protective film is 1500 nm or less.

3. The wavelength conversion sheet according to claim 1, wherein the quantum dot-containing layer is one of the layers containing a cured product of a curable resin composition.

4. The wavelength conversion sheet according to claim 1, wherein the layer in contact with the outer side of the first barrier layer and the layer in contact with the outer side of the second barrier layer each have a thickness of 5.0 µm or more.

5. The wavelength conversion sheet according to claim 4, wherein the layer in contact with the outer side of the first barrier layer is the first support, and the layer in contact with the outer side of the second barrier layer is the second support.

6. The wavelength conversion sheet according to claim 1, wherein
the first protective film further comprises a first adhesive layer and a first bulking base material,
the second protective film further comprises a second adhesive layer and a second bulking base material, and
the first adhesive layer and the second adhesive layer are each one of the layers containing a cured product of a curable resin composition.

7. The wavelength conversion sheet according to claim 6, wherein
the first protective film comprises the first bulking base material, the first adhesive layer, the first barrier layer, and the first support in presented order from the inner side to the outer side, and
the second protective film comprises the second bulking base material, the second adhesive layer, the second support, and the second barrier layer in presented order from the outer side to the inner side.

8. The wavelength conversion sheet according to claim 1, wherein the first protective film further comprises a first primer layer on an outermost side of the first protective film.

9. The wavelength conversion sheet according to claim 1, wherein the second protective film further comprises a second primer layer on an innermost side of the second protective film.

10. The wavelength conversion sheet according to claim 1, comprising an anti-sticking layer on at least either one of an innermost side of the first protective film and an outermost side of the second protective film.

11. The wavelength conversion sheet according to claim 1, wherein the first barrier layer and the second barrier layer each comprise an inorganic oxide layer and a coating layer.

12. The wavelength conversion sheet according to claim 1, wherein a total thickness of layers positioned on the inner side of the first barrier layer is 10 µm or more.

13. The wavelength conversion sheet according to claim 1, wherein a total thickness of layers positioned on the outer side of the second barrier layer is 20 µm or more.

14. A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to any one of claims 1 to 13.

15. A liquid crystal display device comprising a backlight and a liquid crystal panel, wherein the backlight is the backlight according to claim 14.
